(19) **Europäisches Patentamt / European Patent Office / Office européen des brevets**

(11) **EP 4 369 747 B1**

(12) **EUROPEAN PATENT SPECIFICATION**

(45) Date of publication and mention of the grant of the patent:
**11.03.2026 Bulletin 2026/11**

(21) Application number: **23769095.3**

(22) Date of filing: **22.09.2023**

(51) International Patent Classification (IPC):
*H04W 4/06* (2009.01)     *G06F 3/16* (2006.01)
*H04W 4/80* (2018.01)     *H04W 8/00* (2009.01)
*H04W 52/24* (2009.01)     *H04M 1/72409* (2021.01)
*H04W 52/18* (2009.01)     *H04L 69/24* (2022.01)
*H04W 52/26* (2009.01)     *H04W 52/32* (2009.01)
*H04W 52/38* (2009.01)     *H04L 1/00* (2006.01)
*H04L 65/611* (2022.01)     *H04W 4/08* (2009.01)

(52) Cooperative Patent Classification (CPC):
**H04W 52/325; H04L 1/0001; H04L 65/611;
H04L 69/24; H04W 4/08; H04W 52/267;
H04W 52/322; H04W 52/383**

(86) International application number:
**PCT/KR2023/014555**

(87) International publication number:
**WO 2024/063613 (28.03.2024 Gazette 2024/13)**

(54) **ELECTRONIC DEVICE, AND METHOD OF TRANSMITTING DATA IN ELECTRONIC DEVICE**

ELEKTRONISCHE VORRICHTUNG UND VERFAHREN ZUR DATENÜBERTRAGUNG IN EINER ELEKTRONISCHEN VORRICHTUNG

DISPOSITIF ÉLECTRONIQUE ET PROCÉDÉ DE TRANSMISSION DE DONNÉES DANS LE DISPOSITIF ÉLECTRONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.09.2022 KR 20220120788
05.12.2022 KR 20220167691**

(43) Date of publication of application:
**15.05.2024 Bulletin 2024/20**

(73) Proprietor: **Samsung Electronics Co., Ltd.
Suwon-si, Gyeonggi-do 16677 (KR)**

(72) Inventors:
• **CHEONG, Gupil
Suwon-si, Gyeonggi-do 16677 (KR)**
• **KANG, Doosuk
Suwon-si, Gyeonggi-do 16677 (KR)**
• **KIM, Jinho
Suwon-si, Gyeonggi-do 16677 (KR)**
• **RYU, Chunwoo
Suwon-si, Gyeonggi-do 16677 (KR)**

• **MOON, Youngsin
Suwon-si, Gyeonggi-do 16677 (KR)**
• **YOO, Hyungseoung
Suwon-si, Gyeonggi-do 16677 (KR)**
• **JIN, Juyeon
Suwon-si, Gyeonggi-do 16677 (KR)**
• **HAN, Euibum
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(56) References cited:
**EP-A1- 4 002 358     CN-A- 112 492 449
CN-A- 114 979 972     KR-A- 20210 000 228
KR-A- 20220 094 363     US-A1- 2021 250 879
US-A1- 2021 288 764     US-A1- 2022 200 716
US-A1- 2022 240 018**

- BAGHEL LALIT KUMAR ET AL: "Evolution of Bluetooth Classic Audio towards Bluetooth LE Audio: Challenges and Road Ahead", 2023 IEEE 17TH INTERNATIONAL CONFERENCE ON INDUSTRIAL AND INFORMATION SYSTEMS (ICIIS), IEEE, 25 August 2023 (2023-08-25), pages 459 - 464, XP034426793, ISBN: 979-8-3503-2362-7, [retrieved on 20230920], DOI: 10.1109/ICIIS58898.2023.10253545

- BAGHEL LALIT KUMAR ET AL: "Evolution of Bluetooth Classic Audio towards Bluetooth LE

Description

[Technical Field]

Various embodiments of the disclosure relate to an electronic device and a method of transmitting data in the electronic device.

[Background Art]

Low energy (LE) electronic devices of Bluetooth Core Version 5.2 or higher may support an LE audio service in a broadcast isochronous stream (BIS) scheme or a connected isochronous stream (CIS) scheme.
In general, a BIS service using LE audio is mainly used for a video/audio electronic device to which multiple users are connectable and available to an audio/video service for an unspecified number of people for a long time. Over the recent years, the use of the BIS service has been gradually expanding to a TV or a mobile electronic device for the purpose of simultaneously providing an audio service to a group of a small number of users rather than an unspecified number of users. Document US2021/250879 discloses different power levels for one ISO interval of a Broadcast Isochrous Stream.

[Disclosure of Invention]

[Solution to Problems]

According to an embodiment, an electronic device includes a communication circuit and at least one processor connected to the communication circuit. The at least one processor is configured to control to broadcast an advertising message including information about a first bitrate and first transmission power used to transmit broadcast isochronous stream (BIS) data. The at least one processor is configured to control to transmit first BIS data based on a second bitrate and second transmission power in a first interval. The at least one processor is configured to control to transmit second BIS data based on a third bitrate and third transmission power in the first interval.
According to an embodiment, an electronic device includes a communication circuit and at least one processor connected to the communication circuit. The at least one processor is configured to receive an advertising message including information about a first bitrate and first transmission power used to transmit BIS data. The at least one processor is configured to receive first BIS data transmitted based on a second bitrate and second transmission power in a first interval. The at least one processor is configured to receive second BIS data transmitted based on a third bitrate and third transmission power in the first interval.
According to an embodiment, a method of operating electronic device includes broadcasting an advertising message including information about a first bitrate and first transmission power used to transmit BIS data. The method includes transmitting first BIS data based on a second bitrate and second transmission power in a first interval. The method includes transmitting second BIS data based on a third bitrate and third transmission power in the first interval.
According to an embodiment, a method of operating an electronic device includes receiving an advertising message including information about a first bitrate and first transmission power used to transmit BIS data. The method includes receiving first BIS data transmitted based on a second bitrate and second transmission power in a first interval. The method includes receiving second BIS data transmitted based on a third bitrate and third transmission power in the first interval.
According to an embodiment, a computer-readable storage medium storing at least one instruction is provided. When executed by at least one processor, the at least one instruction causes an electronic device to perform a plurality of operations. The plurality of operations include broadcasting an advertising message including information about a first bitrate and first transmission power used to transmit BIS data. The plurality of operations include transmitting first BIS data based on a second bitrate and second transmission power in a first interval. The plurality of operations include transmitting second BIS data based on a third bitrate and third transmission power in the first interval.
According to an embodiment, a computer-readable storage medium storing at least one instruction is provided. When executed by at least one processor, the at least one instruction causes an electronic device to perform a plurality of operations. The plurality of operations include receiving an advertising message including information about a first bitrate and first transmission power used to transmit BIS data. The plurality of operations include receiving first BIS data transmitted based on a second bitrate and second transmission power in a first interval. The plurality of operations include receiving second BIS data transmitted based on a third bitrate and third transmission power in the first interval.

[Brief Description of Drawings]

FIG. 1 is a block diagram illustrating an electronic device in a network environment according to an embodiment.

FIG. 2 is a block diagram illustrating an audio module according to an embodiment.

FIG. 3 illustrates an exemplary operation of a plurality of electronic devices according to an embodiment.

FIG. 4 is a diagram illustrating a broadcast isochronous group (BIG) event and a broadcast isochronous stream (BIS) event according to an embodiment.

FIG. 5A illustrates an example of sequential arrangement of BISs according to an embodiment.

FIG. 5B illustrates an example of interleaved arrangement of BISs according to one embodiment.

FIGS. 6A, 6B, and 6C each illustrate an example of payload allocation in a BIS according to an embodiment.

FIG. 7 illustrates an example of a BIG including two sequentially arranged BISs according to an embodiment.

FIG. 8A illustrates an example of an isochronous physical channel protocol data unit (PDU) format according to an embodiment.

FIG. 8B illustrates an example of a broadcast isochronous PDU header according to an embodiment.

FIGS. 8C illustrates an example of a broadcast isochronous PDU header flag according to an embodiment.

FIG. 8D illustrates an example of a BIG control PDU payload format according to an embodiment.

FIG. 8E illustrates an example of BIG control PDU opcodes according to an embodiment.

FIG. 9 illustrates an example of a BIG information (BIGInfo) format according to an embodiment.

FIG. 10 illustrates an example of a time reference for a BIG event from a periodic advertising event according to an embodiment.

FIG. 11 is a flowchart illustrating an operation of a BIS source electronic device according to an embodiment.

FIG. 12 illustrates an example of periodic advertising performed by an electronic device according to an embodiment.

FIGS. 13A and 13B each illustrate an example of grouping BIS data into a specific group by an electronic device according to an embodiment.

FIGS. 14A, 14B, and 14C each illustrate an example of transmitting BIS data by an electronic device according to an embodiment.

FIG. 15A illustrates an example of payload transmission in a BIS according to an embodiment.

FIG. 15B illustrates an example of payload transmission in a BIS according to an embodiment.

FIGS. 15C and 15D each illustrate an example of increasing the bitrate and transmission power of specific data by an electronic device according to an embodiment.

FIG. 16 illustrates an example of an ISO interval in case that an electronic device increases the bitrate and transmission power of specific data according to an embodiment.

FIG. 17 illustrates an example of adjusting the bitrate and transmission power of general BIS data in case that an electronic device fails to transmit data related to a pre-transmission offset (PTO) according to an embodiment.

FIG. 18 illustrates an example of transmitting BIS data by an electronic device according to an embodiment.

FIG. 19A illustrates an example of selectively receiving BIS data in a clean environment by an electronic device according to an embodiment.

FIG. 19B illustrates an example of a reception buffer in case that an electronic device selectively receives BIS data in a clean environment according to an embodiment.

FIG. 20A illustrates an example of selectively receiving BIS data in a busy environment by an electronic device according to an embodiment.

FIG. 20B illustrates an example of a reception buffer in case that an electronic device selectively receives BIS data in a busy environment according to an embodiment.

FIG. 21A illustrates an example of mandatorily receiving BIS data by an electronic device according to an embodiment.

FIG. 21B illustrates an example of a reception buffer in case that an electronic device mandatorily receives BIS data according to an embodiment.

FIG. 22 illustrates a method of operating an electronic device according to an embodiment of the disclosure.

FIG. 23 illustrates an example of fine control of BIS data by an electronic device according to an embodiment.

FIG. 24 illustrates another example of fine control of BIS data by an electronic device according to an embodiment.

FIG. 25 illustrates another example of fine control of BIS data by an electronic device according to an embodiment.

FIGS. 26A and 26B are diagrams illustrating an operation effect of an electronic device according to an exemplary embodiment.

**[Mode for the Invention]**

An embodiment of the disclosure will be described below in detail with reference to the attached drawings. Lest it should obscure the subject matter of the embodiment of the disclosure, a detailed description of a generally known function or structure will be avoided. Although the terms as described later are defined in consideration of functions in the embodiment of the disclosure, the terms may be changed according to the intention of a user or an operator, or customs.

Therefore, the definitions should be made by the meaning of each term lying within.

The technical terms as used in the disclosure are provided merely to describe a specific embodiment, not intended to limit an embodiment of the disclosure. Further, unless otherwise defined, the technical terms as used in the disclosure should be interpreted as the same meanings as generally understood by those skilled in the art, and should not be interpreted as excessively inclusive or excessively narrow meanings. In addition, when the technical terms used in the disclosure are incorrect ones that do not accurately express the disclosure, they should be understood by being replaced with technical terms that can be correctly understood by those skilled in the art. In addition, the general terms used in the disclosure should be interpreted as defined in dictionaries or according to the context, and should not be interpreted as excessively narrow meanings.

Singular forms used in the disclosure include plural referents unless the context clearly dictates otherwise. In this application, the term "have", "may have", "include", or "may include" should not be interpreted as necessarily including multiple components or operations described in the specification, and should be interpreted as excluding some of the components or operations or further including additional components or steps.

Further, the terms including first or second as used in the disclosure may be used to describe various components, and the components should not be limited by the terms. The terms are used only for the purpose of distinguishing one component from another. For example, a first component may be called a second component, and vice versa without departing from the scope of the disclosure.

When it is said that a component is "connected to" or "coupled to" another component, the component may be connected or coupled to the other component directly or with a third component in between. On the other hand, when it is said that a component is "directly connected to" or "directly coupled to" another component, it should be understood that there is no third component in between.

An embodiment of the disclosure will be described in detail with reference to the attached drawings. Like reference numerals are assigned to the same or similar components irrespective of the drawing numbers, and in this regard, a redundant description will be avoided. Further, a detailed description of a known technology will be omitted lest it should obscure the subject matter of the disclosure. Further, it should be noted that the attached drawings are presented merely to help understanding of the disclosure.

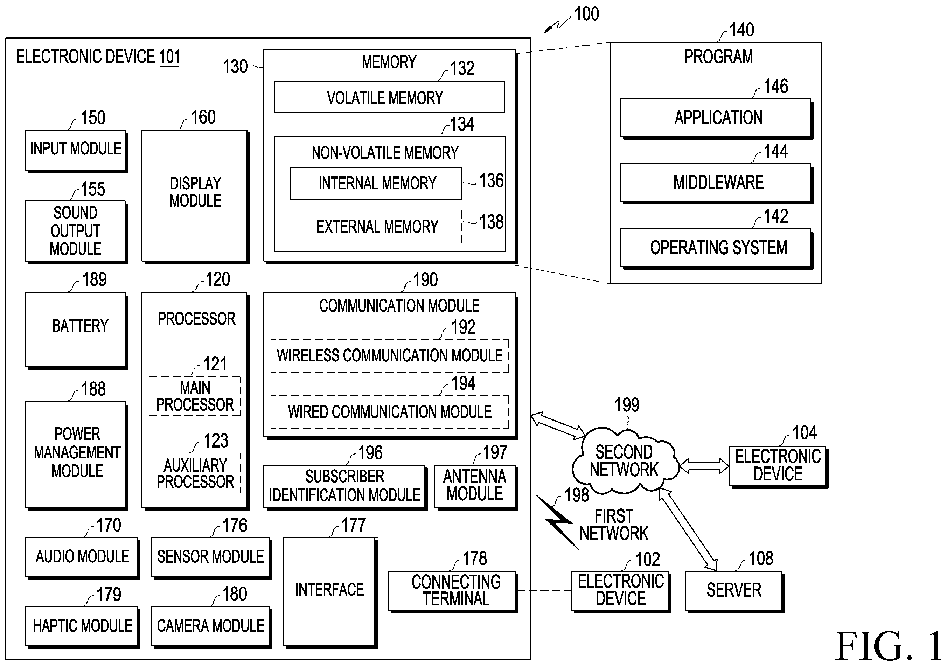

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, a home appliance, wireless earphones, or ear buds. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment of the disclosure as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

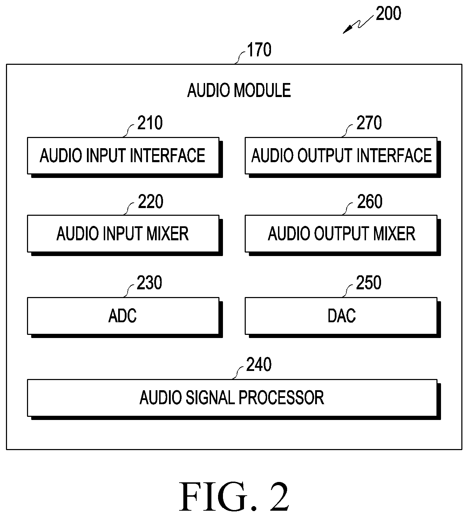

FIG. 2 is a block diagram 200 illustrating the audio module 170 according to an embodiment. Referring to FIG. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is received from the external electronic device 102 (e.g., a headset or a microphone), the audio input interface 210 may be connected with the external electronic device 102 directly via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

Low energy (LE) electronic devices of Bluetooth core Version 5.2 or higher may support LE audio service in a broadcast isochronous stream (BIS) scheme or a connected isochronous stream (CIS) scheme.

Various embodiments of the disclosure relate to the BIS scheme among audio services that may be provided between Bluetooth Low Energy (or LE) electronic devices. BIS is a non-acknowledgment protocol, and it may be difficult to secure reliability with BIS during data transmission/reception. To solve this problem, BIS has a protocol to solve the reliability problem in data transmission/reception by increasing the number of retransmissions for the same protocol data unit (PDU). In this case, the same PDU should be necessarily retransmitted several times, resulting in waste of resources to be allocated for coexistence with wireless fidelity (WiFi) or Bluetooth (BT) concurrency. Moreover, the mandatory retransmissions may cause great current consumption of an electronic device, and a fixed bitrate should be maintained because it is impossible to accurately respond to a surrounding environment, thereby resulting in loss of a data transmission rate.

Various embodiments of the disclosure may secure high reliability and provide a user with usability such as sound quality improvement or sound interruption prevention by classifying BIS audio PDUs to be transmitted based on a specific criterion to ensure reliability during data transmission/reception in a BIS and operating a specific PDU group with different characteristics (e.g., a different bitrate, data rate, and/or transmission power). In the disclosure, a bitrate may mean the size of data in bits to be processed per second. For example, 'bits per second (bps)' may be used as a bitrate unit.

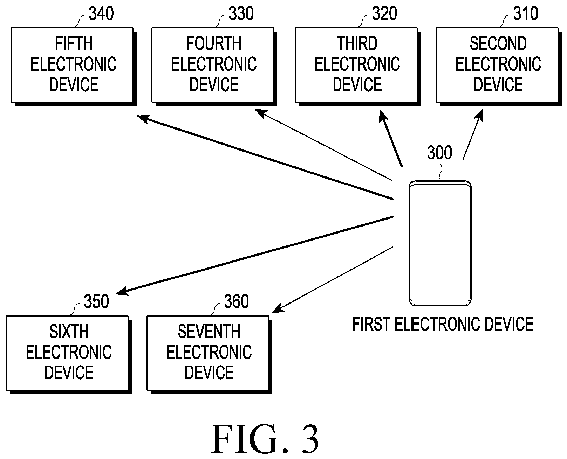

FIG. 3 illustrates an exemplary operation of a plurality of electronic devices according to an embodiment.

Referring to FIG. 3, a first electronic device 300 may be implemented as a portable communication device (e.g., a smartphone), and each of second to seventh electronic devices 310 to 360 may be implemented as an electronic device including a speaker (e.g., a wireless earphone, an audio device, a Bluetooth speaker, a home appliance, a wearable device, a smart watch, and/or a smart ring).

According to an embodiment, the second electronic device 310 and the third electronic device 320 may be implemented as a pair of wireless earphones worn on a user's left and right ears, respectively. According to an embodiment, the fourth electronic device 330 and the fifth electronic device 340 may be implemented as a pair of wireless earphones worn on a user's left and right ears, respectively. According to an embodiment, the sixth electronic device 350 and the seventh electronic device 360 may be implemented as a pair of wireless earphones worn on a user's left and right ears, respectively.

The first electronic device 300 may broadcast audio data in the BIS scheme. According to an embodiment, at least one of the second electronic device 310, the third electronic device 320, the fourth electronic device 330, the fifth electronic device 340, the sixth electronic device 350, or the seventh electronic device 360 may receive the audio data broadcast from the first electronic device 300.

The first electronic device 300 may broadcast configuration information required for other electronic devices to receive the audio data. According to an embodiment, the at least one of the second electronic device 310, the third electronic device 320, the fourth electronic device 330, the fifth electronic device 340, the sixth electronic device 350, or the seventh electronic device 360 may receive the audio data based on the configuration information broadcast from the first electronic device 300. According to an embodiment, when the second electronic device 310 and the third electronic device 320 operate as a pair, one of the second electronic device 310 and the third electronic device 320 may receive the audio data based on the configuration information broadcast from the first electronic device 300.

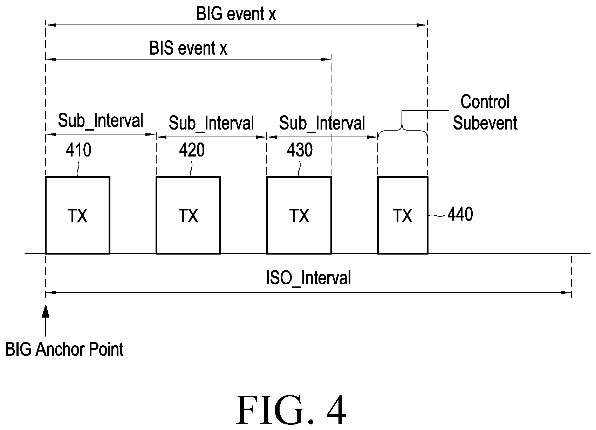

FIG. 4 is a diagram illustrating a broadcast isochronous group (BIG) event and a BIS event according to an embodiment. A broadcasting scheme may enable streaming of data from a single source (or a source electronic device) to a plurality of sinks (or sink electronic devices) using a group of synchronized streams. Each stream used in the broadcasting scheme may be referred to as a BIS, and a group of BISs may be referred to as a BIG.

A BIS logical transport may be used to transmit one or more isochronous data streams to all devices for a BIS within coverage (e.g., within a certain distance). A BIS may include one or more subevents for transmitting isochronous data packets. The BIS may support transmission of a plurality of isochronous data packets in all BIS events.

Referring to FIG. 4, BIG event x may include BIS event x, and specific isochronous data may be transmitted in the BIS event x. ISO_Interval represents a time between two adjacent BIG anchor points, and Sub_Interval represents a time between the starts of two consecutive subevents in each BIS. According to an embodiment, BIG event x may include at least one BIS event x, and BIS event x may include at least one subevent.

A BIS event may include one or more BIS PDUs 410, 420, and 430. A link layer may transmit a BIS PDU only in a BIG event. The link layer may transmit only a BIS PDU in a part of a BIG event. Each BIG event may be divided into Num_BIS separate BIS events and a control subevent. According to an embodiment, when determining that channel information needs to be changed, the source electronic device may transmit a control subevent including changed channel information 440. According to an embodiment, when channel information does not need to be changed, the source electronic device may not transmit the control subevent. According to an embodiment, when determining that the BIG needs to be terminated, the source electronic device may transmit the control subevent. Each BIS event may be divided into NSE subevents. Each BIS event may start at a moment called a BIS anchor point and end after its last subevent. Each BIG event may start at a moment called a BIG anchor point and end after a control subevent, if present. When a control subevent does not exist, the BIG event may end at the end of the last BIS event. BIG anchor points may be spaced from each other at regular intervals of ISO_Interval. The BIS anchor point of BIS n in a BIG should be (n - 1) * BIS_Spacing after a BIG anchor point and may be spaced at a regular interval of ISO_Interval. The subevents of each BIS may be spaced apart from each other at intervals of Sub_Interval. An isochronous broadcaster may terminate the BIG event at least T_IFS before the BIG anchor point of the next BIG event.

A BIS has no acknowledgment protocol, and traffic may be transmitted in one direction only from a broadcasting device. The BIS logical transport has no acknowledgment, and to improve transmission reliability, isochronous data packets may be retransmitted by increasing the number of subevents in every event.

The BIS may support an LE-stream (LE-S) or LE-frame (LE-F) logical link, and also support a low energy broadcast control (LEB-C) logical link. The BIS may be identified by a unique access address and timing information. The access address and the timing information may be transmitted in a packet transmitted using an associated periodic advertising broadcast (PADVB) logical transport. A scanning device supporting a synchronized receiver role function may receive isochronous data in a BIS after synchronizing with the BIS using timing information from a periodic advertising train.

Each BIS is a part of a BIG, and the BIG may include one or more BISs. Multiple BISs in a BIG may have a common timing reference based on a broadcaster and be synchronized in time. For example, left and right channels of an audio stereo stream received by a separate device needs to be rendered simultaneously. The multiple BISs in the BIG may be scheduled in a sequential arrangement or an interleaved arrangement.

To receive a BIS in an electronic device, a link layer may have to obtain BIG information BIGInfo that describes streams. The big information BIGInfo may be obtained from additional controller advertising data (ACAD) of periodic advertising.

When a PHY field in the BIG information BIGInfo does not support the link layer or is reserved for future use (RFU), the link layer may not enter a synchronization state for a BIG specified in the BIG information BIGInfo, ignoring the BIG information BIGInfo. In this state, the link layer may have to listen to isochronous channel indices for a BIS data PDU included in the BIG specified in the BIG information BIGInfo. When the link layer fails to receive a BIS data PDU within six BIG events in a synchronized sub-state, the link layer may notify a host of a first BIG event that it has listened to as the start, and transition to a standby state. When the synchronized sub-state is entered, the link layer may need to listen to the isochronous broadcaster at least once out of six consecutive BIS events. The electronic device should not attempt synchronization to a BIG having the same associated periodic advertising train as an already synchronized BIG.

A device synchronized to a BIG may also be referred to as a synchronized receiver. The synchronized receiver may be synchronized to a periodic advertising train, which is not mandatory. The link layer may report isochronous data received in a BIS data PDU included in a BIG to the host, when requested by the host. The host may specify that only data of a specific BIS in a BIG should be reported. The link layer may listen to the contents of a new BIG control PDU and operate accordingly. The link layer does not need to listen to a broadcast isochronous PDU, which is a retransmission of an already successfully received PDU, or a BIS data PDU of which the data will not be reported to the host unless needed to maintain synchronization with a clock of the isochronous broadcaster. The link layer may have to perform window widening during listening. The link layer may listen only until bisPayloadCounter is not greater than 2^29-1.

When the link layer is capable of scheduling a BIG that the host requests, the link layer may have to enter an isochronous broadcasting state, when instructed by the host. In this state, the link layer may transmit a BIS PDU as follows. When transmitting a first BIS data PDU, the link layer may have to inform the host of the transmission. In this state, the host may deactivate periodic advertising trains associated with the BIG and then reactivate them. Each instance of a link layer state machine in an isochronous broadcasting state may have to transmit a BIG including one or more BISs. Each BIS may transmit a separate isochronous data flow. A maximum of 31 BISs may exist in the BIG.

For each BIG, at least one of the following parameters may be defined.

- Num_BIS is the number of BISs in the BIG. Each BIS in the BIG may be assigned a different BIS_Number ranging from 1 to Num_BIS.
- ISO_Interval is a time between two adjacent BIG anchor points (e.g., in units of 1.25ms). For example, the value of ISO_Interval may range from 4 to 3200 (5ms to 4s).
- BIS_Spacing is a time between the starting points of corresponding subevents in adjacent BISs or a time between the starting point of the first subevent of the last BIS and a control subevent in a BIG.
- Sub_Interval is a time between the starts of two consecutive subevents in each BIS.
- Max_PDU is a maximum number of data octets (excluding MIC) in which each BIS data PDU may be transmitted in a BIG. For example, the value of Max_PDU ranges from 1 to 251.
- Max_SDU is a maximum size of a service data unit (SDU) in this BIG. For example, the value of Max_SDU ranges from 1 to 4095.

A max SDU means a maximum size of transmittable data. For example, assuming that the max SDU is 120 bytes and an ISO interval is 10ms, the bitrate may be 96kbps (120 bytes=960 bits, and 96,000 bits/second => 96kbps).

- Max PDU transmission time (MPT) should be equal to a time taken to transmit a packet including a BIS data PDU together with payload of Max_PDU octets in a PHY used in a BIS. It is assumed that S=8 in an LE coded PHY.
- BN, PTO, and IRC control which data is to be transmitted in each BIG event. The value of BN should range from 1 to 7. The value of PTO should range from 0 to 15. The value of IRC should range from 1 to 15.
- Number of subevents (NSE) is the number of subevents per BIS in each BIG event. This value should range from 1 to 31, which should be an integer multiple of the BN.
- Framed indicates whether the BIG delivers framed or unframed data.
- Encrypted indicates whether the BIG is encrypted.

These parameters do not change during the lifetime of the BIG. The required range of each parameter is a full range of valid values excluding the following parameters, and only the enumerated values are required.

- Num_BIS: 1
- BN: 1
- NSE: all supported values of BN
- PTO: 0
- IRC: all supported values of GC

Each BIG should have its associated 39-bit counter, bigEventCounter. This value is set to 0 for the first BIG event of the BIG and incremented by 1 for each BIG event, regardless of whether the isochronous broadcaster transmits broadcast isochronous PDUs during the event. Each BIS should have its associated 39-bit counter bisPayloadCounter. The link layers of the isochronous broadcaster and the synchronized receiver should be terminated before bisPayloadCounter becomes $2^{39}-1$. For reference, when a BIG event starts, all BISs in the BIG have the same value of bisPayloadCounter, and also bigEventCounter * BN=bisPayloadCounter.

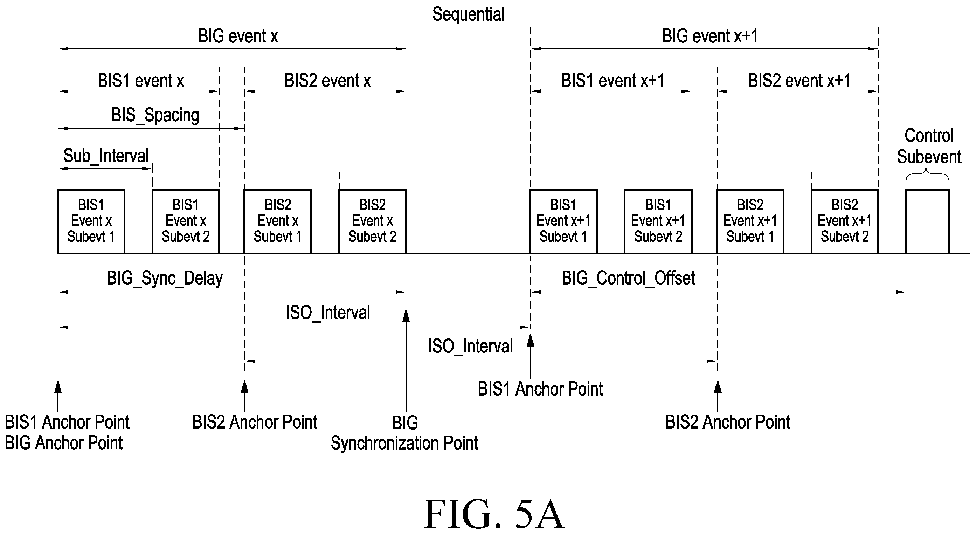

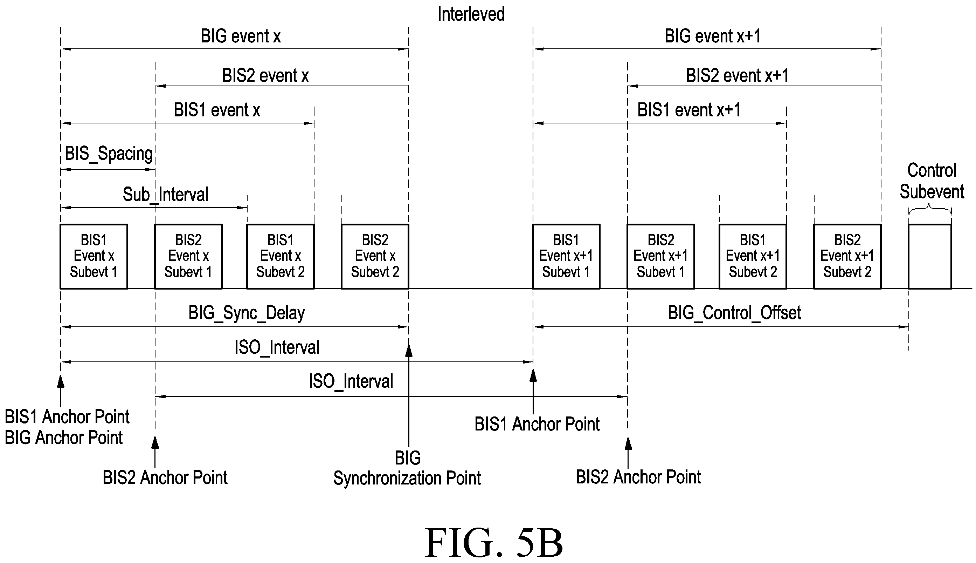

FIG. 5A illustrates an example of sequentially arranged BISs according to an embodiment, and FIG. 5B illustrates an example of interleaved-arranged BISs according to an embodiment.

The BISs of a BIG may be arranged in a sequential or interleaved manner by appropriately setting the values of one or more of the Sub_Interval and BIS_Spacing parameters. BIS subevents are opportunities in which the isochronous broadcaster may transmit broadcaster isochronous BIS PDUs and the synchronized receiver may receive them.

Referring to FIG. 5A, BIGs with Num_BIS=2 and NSE=2 are sequentially arranged, by way of example. BIG event x may include BIS1 event x and BIS2 event x sequentially, BIS1 event x may include BIS1 Event x Subevt 1 and BIS1 Event x Subevt 2, and BIS2 event x may include BIS2 Event x Subevt 1 and BIS2 Event x Subevt 2. According to an embodiment, in the case of sequential arrangement, BIS_Spacing should be equal to or greater than NSE * Sub Interval, and thus all subevents of a BIS event may occur together.

Referring to FIG. 5B, BIGs with Num_BIS=2 and NSE=2 are arranged in an interleaved manner. BIG event x may alternately include BIS1 event x and BIS2 event x. BIG event x may include BIS1 Event x Subevt 1, BIS2 Event x Subevt 1, BIS1 Event x Subevt 2, and BIS2 Event x Subevt 2 in time order. According to an embodiment, in the case of interleaved arrangement, Sub_Interval should be Num_BIS * BIS_Spacing, and the first subevents of all BISs may be adjacent to each other, and then the second subevents of all BISs may be adjacent to each other. In each case, a minimum value of BIS_Spacing may have to be used.

Referring to FIGS. 5A and 5B, an available maximum length for a data part (excluding a control subevent) in a BIG event may be represented as BIG_Sync_Delay. The value of BIG_Sync_Delay may be equal to a time from an anchor point to BIG synchronization, which is the end of a packet including payload of Max_PDU octets transmitted in the last subevent.

BIG_Sync_Delay is equal to (Num_BIS - 1) * BIS_Spacing+(NSE - 1) * Sub_Interval+MPT. The link layer should transmit one BIG data PDU at the start of each subevent in an isochronous broadcasting event, unless there are scheduling conflicts, for example. According to an embodiment, at least one BIS PDU may be transmitted within 6 consecutive BIS events. In case that transmission of a PDU is failed, the link layer may assume that all other purposes (packet timing and payload selection) have been completed.

A data source should supply a data burst including BN payloads in each BIS event, and each data may have to have a single fragment or one or more SDU segments. Although this burst is associated with the corresponding BIS event, it may also be transmitted in an earlier event. While each PDU including given payload has the same link layer identifier (LLID) value, it may have a different control subevent sequence number (CSSN) and control subevent transmission flag (CSTF). For reference, a burst associated with a BIS event may include payloads of bisPayloadCounter between bigEventCounter * BN and (bigEventCounter+1) * BN - 1.

The subevents of each BIS event may be divided into groups of BN subevents. Therefore, group count (GC) groups may be given by GC=NSE/BN.

The immediate repetition count (IRC) may specify the number of groups carrying data related to a current BIS event. The remaining groups may carry data related to a BIS event indicated by a pre-transmission offset (PTO). The IRC should be greater than 0 and not greater than the GC. When IRC=GC, the PTO should be ignored. Otherwise, the PTO should be greater than 0.

The groups of subevents are numbered sequentially from 0 to GC-1, using g.

- When g < IRC, a group g should include data related to the current BIS event.
- When g >= IRC, the group g should include data related to a future BIS event of PTO * (g - IRC+1) BIS events after the current BIS event.

The payload of each burst should always be transmitted in the same order.

For reference, when the GC is set to a value greater than 1, a redundant transmission may be provided to compensate for the lack of acknowledgment during broadcasting, while when the PTO is set to a non-zero value (pre_transmission), large time diversity of redundant data duplication may be provided.

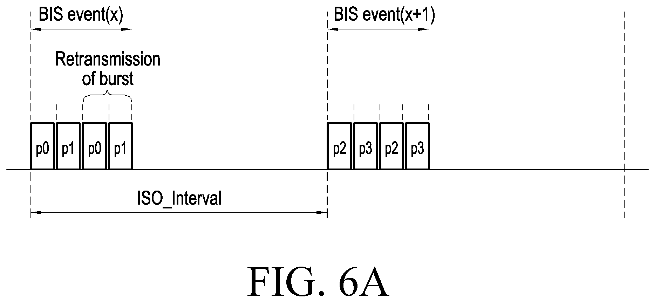

FIGS. 6A to 6C each illustrate an example of payload allocation in a BIS according to an embodiment.

FIG. 6A illustrates payload allocation in a BIS with the characteristics of BN=2, IRC=2, PTO=0, and NSE=4. Since BN=2, payloads p0 and p1 may be transmitted in BIS event(x), and since IRC=2, the payloads p0 and p1 may be transmitted once more in BIS event(x) (retransmission of a burst). Since PTO=0, data related to a BIS event transmitted later may not be pre-transmitted in BIS event(x). BIS event(x) includes payloads p0, p1, p0, and p1 in time order, and the repeatedly transmitted p0 and p1 are retransmissions of a burst. BIS event(x+1) includes payloads p2, p3, p2, and p3 in time order, and the repeatedly transmitted p2 and p3 are retransmissions of a burst. In FIG. 6A, since PTO=0, data related to a current BIS event may be repeatedly transmitted in each BIS event, and data related to a later transmitted BIS event may not be pre-transmitted.

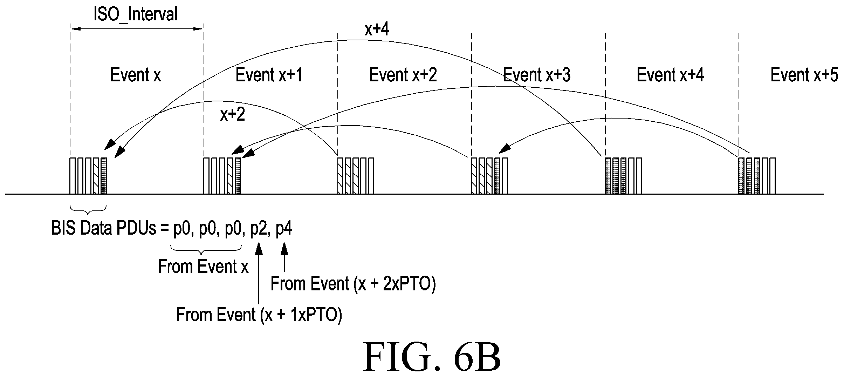

FIG. 6B illustrates payload allocation in a BIS with characteristics of BN=1, IRC=3, PTO=2, and NSE=5. Since BN=1, payload p0 may be transmitted in BIS event(x), and since IRC=3, the payload p0 may be transmitted three times in BIS event(x) (retransmissions of a burst). Since BN=1, PTO=2, and NSE=5, payload p2 related to BIS event(x+2) and payload p4 related to BIS event(x+4) may be pre-transmitted in BIS event(x). BIS event(x) may include payloads p0, p0, p0, p2, and p4 in time order, p0 may be data related to the current BIS event, Event x, p2 may be data related to a BIS event, Event x+2 and pre-transmitted in the BIS event, Event x in advance, and p4 may be data related to a BIS event, Event x+4 and pre-transmitted in the BIS event, Event x. The start time of the BIS event, Event x+2 may be a time point after two ISO_Intervals from the start time of the BIS event, Event x. The start time of the BIS event, Event x+4 may be a time point after four ISO_Intervals from the start time of the BIS event, Event x.

In BIS event(x+1), payload p1 may be transmitted three times (retransmissions of a burst), and payload p3 related to BIS event(x+3) and payload p5 related to BIS event(x+5) may be pre-transmitted.

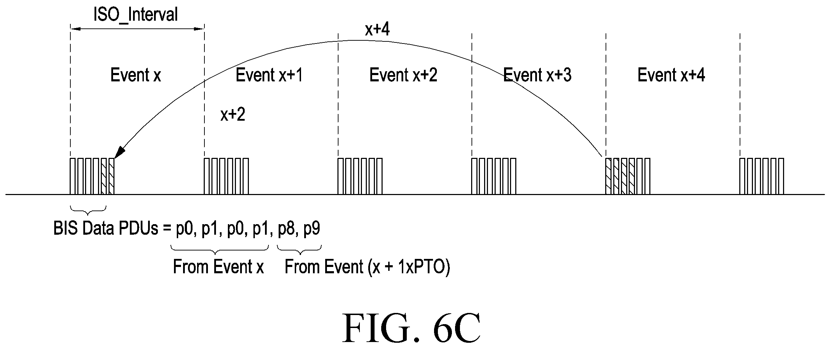

FIG. 6C illustrates payload allocation in a BIS with the characteristics of BN=2, IRC=2, PTO=4, and NSE=6. Since BN=2, payloads p0 and p1 may be transmitted in BIS event(x), and since IRC=2, the payloads p0 and p1 may be transmitted once more in BIS event(x) (retransmissions of a burst). Since BN=2, PTO=4, and NSE=6, payloads p8 and p9 related to BIS event(x+4) may be transmitted in BIS event(x). BIS event(x) may include payloads p0, p1, p0, p1, p8, and p9 in time order, p0 and p1 may be data related to the current BIS event, Event x and repeatedly transmitted, and p8 and p9 may be data related to the BIS event, Event x+4.

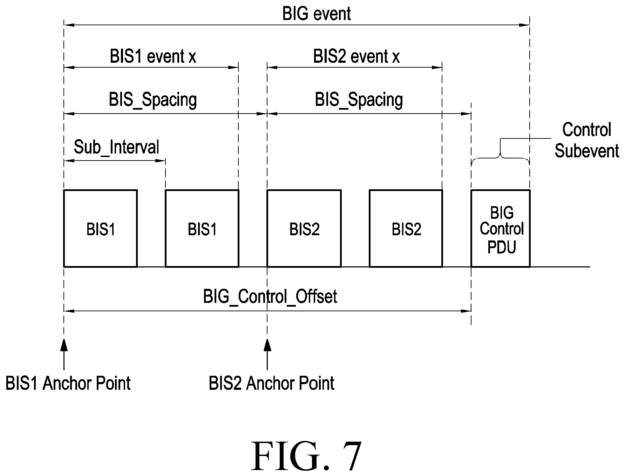

FIG. 7 illustrates an example of a BIG including two sequentially arranged BISs according to an embodiment.

Referring to FIG. 7, a BIG event may include BIS1 event x, BIS 2 event x, and a control subevent, BIS1 event x may include two BIS1s, and BIS2 event x may include two BIS2s. The link layer may transmit control information about a BIG by transmitting a single BIG control PDU at the start of a control subevent. The link layer does not transmit a BIG control PDU at other times. In the disclosure, control information about the BIG may be transmitted in the control subevent. According to an embodiment, a first electronic device (e.g., a source electronic device) may transmit control information about a BIG in a control subevent to a second electronic device (e.g., a sink electronic device).

A time from a BIG anchor point to the start of the control subevent, specified by BIG_Control_Offset is given as follows.

$$BIG\_Control\_Offset=Num\_BIS * BIS\_Spacing \text{ for Sequential}$$

$$BIG\_Control\_Offset=NSE * Sub\_Interval \text{ for Interleaved}$$

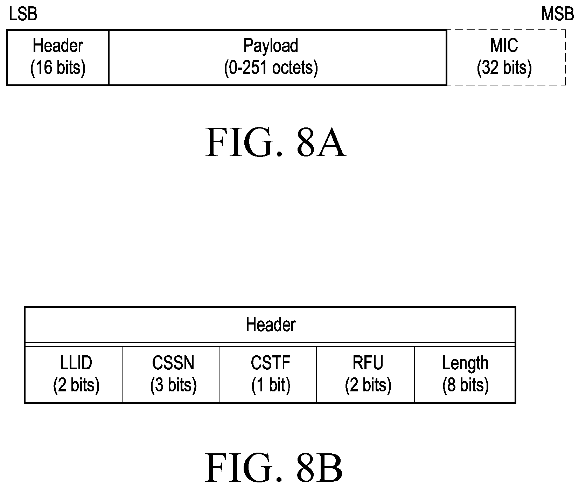

FIG. 8A illustrates an example of an isochronous physical channel PDU format according to an embodiment.

An isochronous physical channel PDU may have a 16-bit Header and Payload of a variable size that may include an MIC field. The format of the Header field and the Payload may vary depending on the type of the isochronous physical channel PDU in use.

When used in a CIS, an isochronous physical channel PDU may be in the form of a connected isochronous PDU. When used in a BIS, an isochronous physical channel PDU may be in the form of a broadcast isochronous PDU. The MIC field is a 4-byte field included in all PDUs of non-zero sizes transmitted in an encrypted CIS or BIS. The MIC field should not be transmitted in an unencrypted CIS or BIS or included in a PDU with payload of length 0.

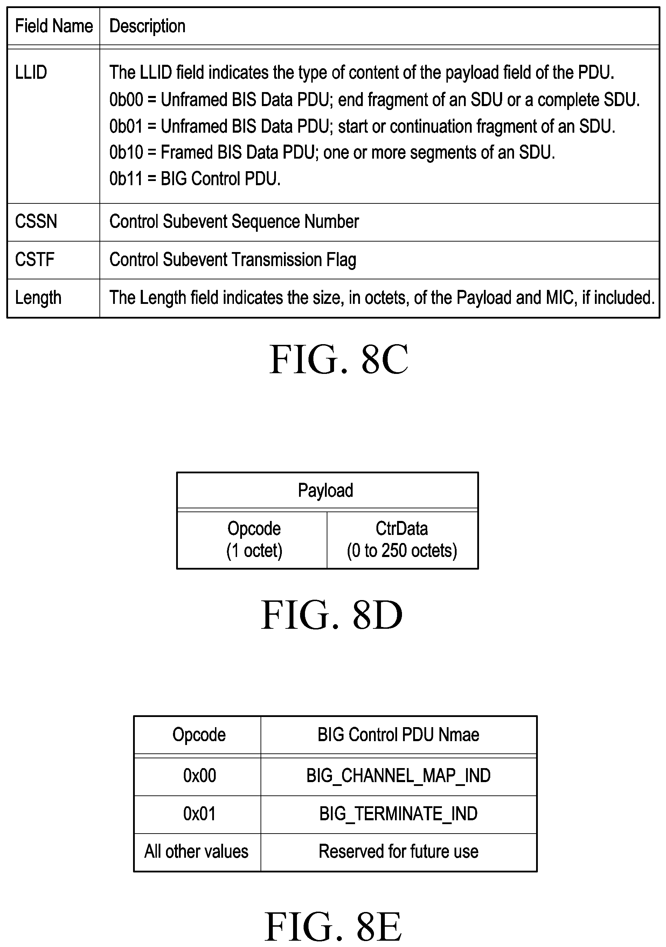

FIG. 8B illustrates an example of a broadcast isochronous PDU Header according to an embodiment, and FIG. 8C illustrates an example of a broadcast isochronous PDU Header flag according to an embodiment.

A broadcast isochronous PDU (BIS PDU) may be implemented as a BIS data PDU or a BIG control PDU. The BIS data PDU may be used to carry isochronous data, and the BIG control PDU may be used to transmit BIG control information.

Referring to FIGS. 8B and 8C, a broadcast isochronous PDU Header may include an LLID field, a CSSN field, a CSTF field, an RFU field, and a Length field.

The LLID field may indicate the content type of the Payload field of the PDU. For example, 0b00 may indicate Unframed BIS data PDU; an end fragment of an SDU or a complete SDU, 0b01 may indicate Unframed BIS data PDU; a start or continuation fragment of an SDU, 0b10 may indicate Framed BIS data PDU; Indicates one or more segments of an SDU, and 0b11 may indicate BIG control PDU.

When the Length field is included, the Length field may indicate the size of the payload and the MIC in octets.

FIG. 8D illustrates an example of a BIG control PDU Payload format according to an embodiment, and FIG. 8E illustrates an example of BIG control PDU Opcodes according to an embodiment.

A BIG control PDU may be identified by an Opcode. A CtrData field in the BIG control PDU may be specified by an Opcode field, and the length of the CtrData field may be fixed in the case of the following Opcodes.

For example, when the Opcode is 0x00, the BIG control PDU may be BIG_CHANNEL_MAP_IND, when the Opcode is 0x01, the BIG control PDU may be BIG_TERMINATE_IND, and when the Opcode is any other value, the BIG control PDU may be RFU.

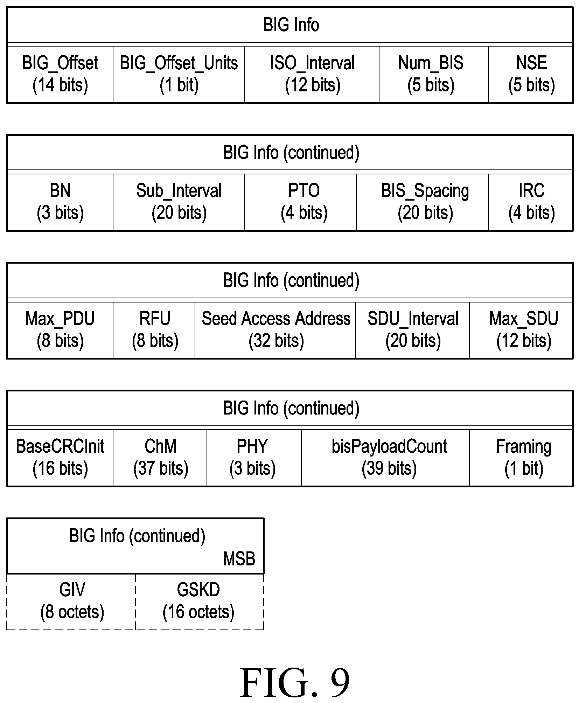

FIG. 9 illustrates an example of the format of BIG information, BIGInfo according to an embodiment.

When the link layer schedules a BIG control PDU to be transmitted in a BIG event, a CSTF bit may be set to 1, and otherwise, to 0 in the Headers of all BIS data PDUs transmitted in the BIG event, whereas the CSTF bit may be set to 0 in the Headers of all BIG control PDUs. All BIS PDUs in the BIG event should have the same CSSN value. When a BIG event including an initial transmission of a new BIG control PDU starts (e.g., when a BIG control PDU is not being retransmitted or not scheduled for transmission), the link layer may increment the CSSN by 1, and not change the CSSN. According to an embodiment, the synchronized receiver may determine that the BIG control PDU is a retransmission of a previously received PDU, using the CSSN. The length of BIGInfo may be 33 octets for an unencrypted BIG and 57 octets for an encrypted BIG.

Referring to FIG. 9, the BIG information, BIGInfo may include at least one of a BIG_Offset field, a BIG_Offset_Units field, an ISO_Interval field, a Num_BIS field, an NSE field, a BN field, a Sub_Interval field, a PTO field, a BIS_Spacing field, an IRC field, a Max_PDU field, an RFU field, and a SeedAccessAddress field, an SDU_Interval field, a Max_SDU field, a BaseCRCInit field, a ChM field, a PHY field, a bisPayloadCount field, a Framing field, a GIV field, or a GSKD field.

The BIG_Offset field may include a time from the start of a packet including BIGInfo to the next BIG anchor point. The value of the BIG_Offset field may be in a time unit indicated by a BIG_Offset_Units bit.

Values may be included in the ISO_Interval, NSE, BN, Sub_Interval, PTO, BIS_Spacing, and IRC fields. Sub_Interval and BIS_Spacing may be specified in micro seconds. The Num_BIS field may include the number of BISs in a BIG. The Max_PDU field may include a maximum duration of a PDU. The SeedAccessAddress field may include the seed access address of the BIG.

SDU_Interval may include an SDU interval value. The Max_SDU field may include the maximum duration of an SDU. The BaseCRCInit field and the ChM field may have the same meaning as the corresponding fields in a COONET_IND PDU. The PHY field may be set to indicate a PHY used in the BIG.

A value may be included in the bisPayloadCount field. The value may be for the first subevent of the BIG event mentioned in the BIG_Offset field. When the BIG delivers framed data, a Framing bit may be set. The GIV and GSKD fields may include values described in Encryption, when the BIG is encrypted.

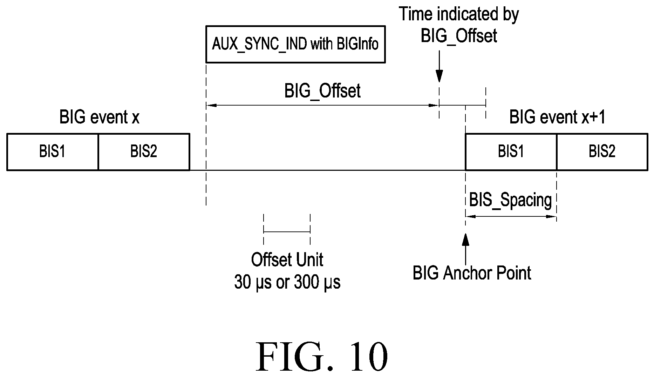

FIG. 10 illustrates an example of a time reference of a BIG event from a periodic advertising event according to an embodiment.

Referring to FIG. 10, a BIG_Offset field may include a time from the start of a packet including BIGInfo to the next BIG anchor point. A value of the BIG_Offset field may be in a time unit indicated by a BIG_Offset_Units bit. An actual time offset may be determined by multiplying the value of BIG_Offset by the unit. The offset may be greater than 600 micro seconds. When the BIG_Offset_Units bit is set, the unit may be 300 micro seconds, and otherwise, the unit may be 30 micro seconds. The BIG_Offset_Units bit may not be set in case that the offset is less than 491,460 micro seconds. The BIG anchor point may be within the offset and the offset plus 1 unit after the start of the corresponding packet.

In various embodiments of the disclosure, when a BIS source electronic device transmits BIS audio data with fixed operating attributes including a fixed bitrate and fixed transmission power to perform a BIS service, the BIS source electronic device may apply variable attributes including a variable bitrate and variable transmission power to some PDUs according to a preset criterion. When the BIS source electronic device applies the variable attributes to some PDUs, current consumption and required resources of the BIS source electronic device may be reduced. When the BIS source electronic device applies the variable attributes to some PDUs, the success rate of audio data reception of a BIS sink electronic device may be increased, current consumption caused by unnecessary reception (Rx) open may be reduced, and sound interruptions may be reduced, thereby providing a stable service to a user.

When performing a broadcast audio service according to a user's intention or a predetermined policy, the BIS source electronic device may periodically advertise information (or BIG information) about a corresponding BIS.

The BIS source electronic device may transmit BIS audio data based on fixed attributes including a fixed bitrate and fixed transmission power. The BIS sink electronic device may receive the BIS audio data transmitted with the fixed attributes, using the BIS information (or BIG information) included in the periodic advertising. The BIS sink electronic device may identify (or calculate) a channel (CH) on which the BIS audio data is transmitted and a transmission time point of the BIS audio data based on the BIS information (or BIG information), and receive the BIS audio data using them.

The BIS source electronic device may determine at least one PDU to which variable attributes including a variable bitrate and variable transmission power are to be applied, based on at least one preset criterion.

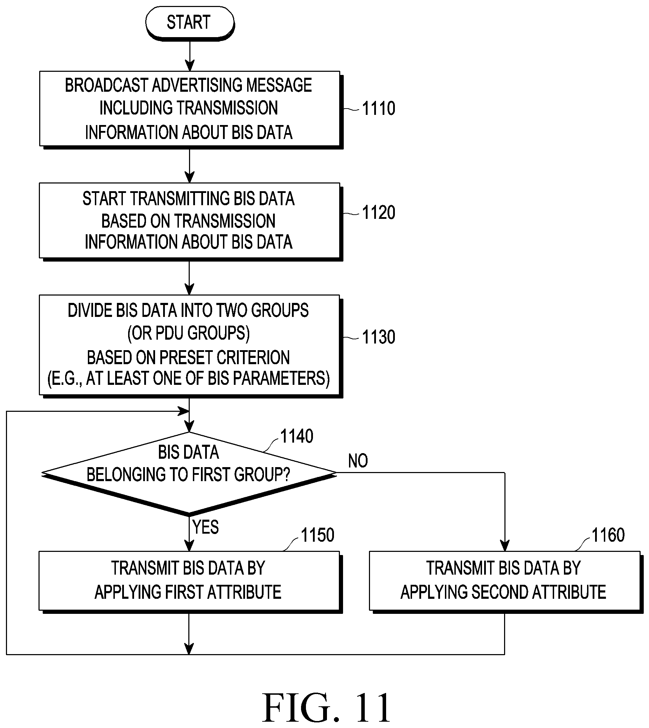

FIG. 11 is a flowchart illustrating an operation of a BIS source electronic device according to an embodiment. The BIS source electronic device of FIG. 11 may be implemented as the electronic device 101 of FIG. 1 or the first electronic device 300 of FIG. 3. A BIS sync electronic device of FIG. 11 may be implemented as the electronic device 102 of FIG. 1, or the second electronic device 310, the third electronic device 320, the fourth electronic device 330, the fifth electronic device 340, the sixth electronic device 350, or the seventh electronic device 360 of FIG. 3.

In operation 1110, the BIS source electronic device may broadcast an advertising message including transmission information about BIS data. According to an embodiment, the transmission information about the BIS data may include information (e.g., a Max_SDU field) related to a maximum value for the bitrate of the BIS data. According to an embodiment, the transmission information about the BIS data may include information related to a maximum value for the transmission power of the BIS data. According to an embodiment, the transmission information about the BIS data may include information about a specified bitrate (e.g., the maximum bitrate) and specified transmission power (e.g., the maximum transmission power) to be applied to the BIS data. According to an embodiment, the BIS sink electronic device may receive the broadcast transmission information about the BIS data and perform synchronization for a BIS.

In operation 1120, when a BIS service starts according to a user's intention or a predetermined policy, the BIS source electronic device may determine a bitrate and transmission power to be applied to the BIS data based on the transmission information about the BIS data, broadcast in operation 1110, and start transmitting the BIS data using the determined bitrate and transmission power. According to an embodiment, when the transmission information about the BIS data includes the information (e.g., the Max_SDU field) related to the maximum value for the bitrate of the BIS data, the bitrate to be applied to the BIS data may be set to be less than or equal to the maximum value of the bitrate. According to an embodiment, when the transmission information about the BIS data includes the information related to the maximum value for the transmission power for the BIS data, the transmission power to be applied to the BIS data may be set to be less than or equal to the maximum value of the transmission power. According to an embodiment, the BIS source electronic device may start transmitting the BIS data based on a bitrate less than or equal to the broadcast specified bitrate and transmission power less than or equal to the specified transmission power. According to an embodiment, the BIS sink electronic device may receive the BIS data having attributes determined based on the broadcast transmission information about the BIS data.

In operation 1130[KIMKH1], the BIS source electronic device may set (or divide) a plurality of BIS data into two groups (or PDU groups) to which different properties (e.g., bitrate, data rate, and/or transmission power) are applied based on a preset criterion (e.g., at least one of BIS parameters). According to an embodiment, the BIS source electronic device set (or divide) a plurality of BIS data included in the same interval into two groups (or PDU groups) to which different properties (e.g., bitrate, data rate, and/or transmission power) are applied. According to an embodiment, the BIS source electronic device may set all or some of data related to a current BIS event as a first group, and set all or some of data related to a BIS event indicated by a PTO as a second group, in at least one interval. According to an embodiment, the BIS source electronic device may set all or some of audio data related to the current BIS event as the first group, and set all or some of control data related to the current BIS event as the second group, in at least one interval. According to an embodiment, the BIS source electronic device may divide the BIS data into two or more groups based on the preset criterion (e.g., at least one of BIS parameters). According to an embodiment, the BIS source electronic device may set first BIS data within a first interval as a first group and set second BIS data within a second interval as a second group based on state information of a communication channel. The first interval and the second interval may be intervals that are adjacent to each other or intervals that are not adjacent to each other. According to an embodiment, when the BIS source electronic device performs Wi-Fi communication at the same time as BIS method-based BT (Bluetooth) communication (e.g., when both BT communication and Wi-Fi communication use the 2.4 GHz frequency band), the BIS source electronic device set (or divide) a plurality of BIS data included in the same interval into two groups (or PDU groups) to which different properties (e.g., bitrate, data rate, and/or transmission power) are applied in consideration of channel interference and/or congestion. According to an embodiment, when the BIS source electronic device performs Wi-Fi communication simultaneously with BIS scheme-based BT communication, the BIS source electronic device set (or divide) a plurality of BIS data included in different intervals into two groups (or PDU groups) to which different properties (e.g., bitrate, data rate, and/or transmission power) are applied in consideration of channel interference and/or congestion.

In operation 1140, the BIS source electronic device may determine whether BIS data belongs to the first group. When the BIS data belongs to the first group in operation 1140, the BIS source electronic device may broadcast first BIS data by applying a first attribute (e.g., a first bitrate and first transmission power) in operation 1150. According to an embodiment, the first attribute (e.g., the first bitrate and/or the first transmission power) may be determined based on the maximum value of the bitrate and/or the maximum value of the transmission power included in the advertising message. According to an embodiment, the first bitrate may be set to be equal to or less than the maximum value of the bitrate included in the advertising message. According to an embodiment, the first transmission power may be set to be equal to or less than the maximum value of the transmission power included in the advertising message.

When the BIS data does not belong to the first group (e.g., the BIS data belongs to the second group) in operation 1140, the BIS source electronic device may broadcast the BIS data by applying a second attribute (e.g., a second bitrate and/or second transmission power) in operation 1160. According to an embodiment, the second attribute (e.g., the second bitrate and/or the second transmission power) may be determined based on the maximum value of the bitrate and/or the maximum value of the transmission power included in the advertising message. According to an embodiment, the second bitrate may be set to a value equal to or less than the maximum value of the bitrate included in the advertising message and greater than the first bitrate. According to an embodiment, the second transmission power may be set to a value equal to or less than the maximum value of the transmission power included in the advertising message and less than the first transmission power.

According to an embodiment, when the BIS source electronic device generates one or more BISs in one BIG and performs a broadcast audio service, it may transmit some of data with a different attribute from that of the remaining data, thereby reducing current consumption caused by repeated BIS data transmissions and secure transmission reliability in spite of the absence of an acknowledgment protocol.

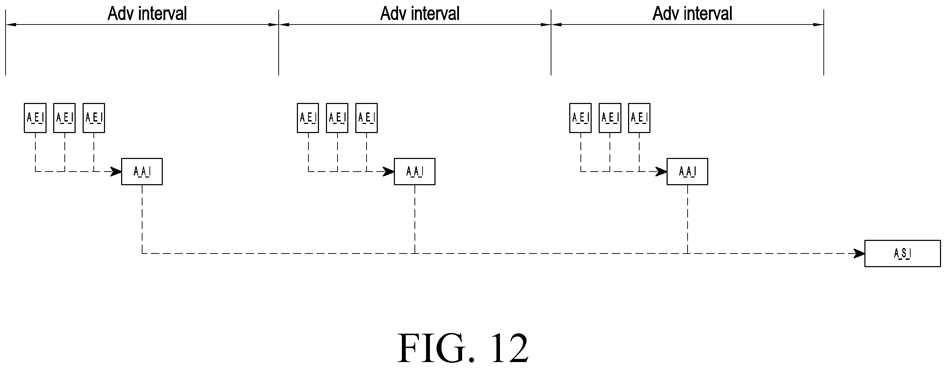

FIG. 12 illustrates an example of periodic advertising performed by an electronic device according to an embodiment.

The BIS source electronic device may perform periodic advertising so that at least one BIS sink electronic device receives corresponding BIS data.

Referring to FIG. 12, the BIS source electronic device may transmit an ADV_EXT_IND PDU(A_E_I) in each predetermined advertising interval, Adv interval. The ADV_EXT_IND PDU(A_E_I) may include an auxiliary packet point indicating the position of AUX_ADV_IND and channel information. AUX_ADV_IND(A_A_I) may include information about at least one of an access address, a channel map, an advertising interval, clock accuracy, or a time offset from currently transmitted AUX_ADV_IND, of AUX_SYNC_IND (A_S_I) which may include BIGInfo. AUX_SYNC_IND(A_S_I) may start before actual BIS data is transmitted, and when the BIS data is transmitted, AUX_SYNC_IND(A_S_I) including BIGInfo with transmission information about BIG audio data inclusive of a BIS parameter may be transmitted. In the disclosure, BIGInfo (or control information about a BIG) may be included and transmitted in AUX_SYNC_IND(A_S_I). According to an embodiment, the electronic device (e.g., the source electronic device) may broadcast AUX_SYNC_IND(A_S_I) including BIGInfo (or the control information about the BIG).

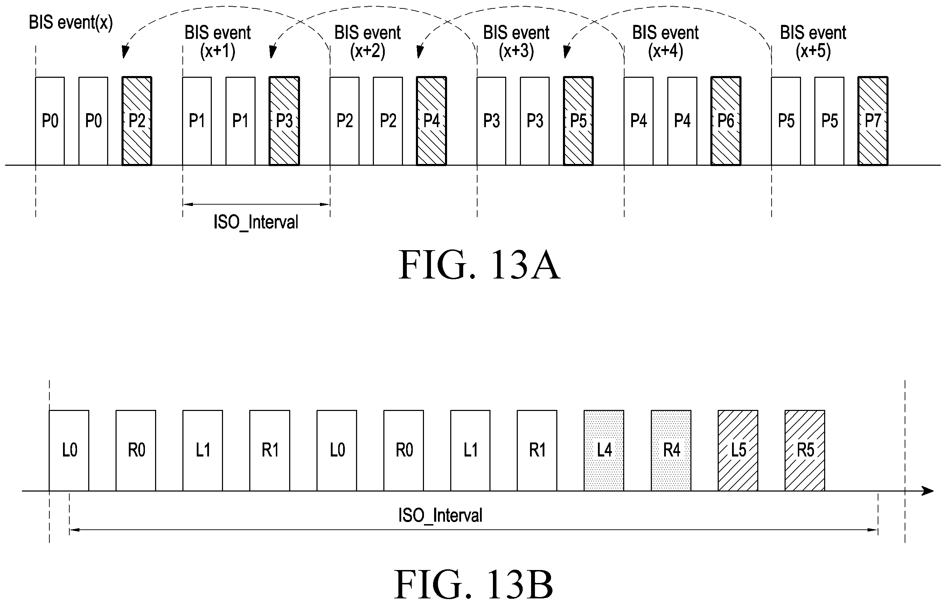

FIGS. 13A and 13B illustrate examples of transmitting BIS data by an electronic device according to an embodiment.

According to an embodiment, the BIS source electronic device may distinguish PDUs indicated by PTOs, which refer to PDUs pre-transmitted to ensure transmission reliability according to the absence of an acknowledgment protocol, from general BIS data, and transmit the PDUS with a different attribute (e.g., a different data rate, bitrate and/or transmission power).

According to an embodiment, the BIS source electronic device may transmit at least one PDU to be transmitted in a first BIS event and at least one PDU related to a second BIS event and pre-transmitted in the first BIS event with different attributes (e.g., different data rates, bitrates, and/or transmission power) based on a transmission time point.

According to an embodiment, the BIS source electronic device may distinguish BIS audio data from BIS control data and transmit them with different attributes (e.g., different data rates, bitrates, and/or transmission power).

Referring to FIG. 13A, when BN=1, IRC=2, PTO=2, and NSE=3, the source electronic device may transmit first data related to a current BIS event and second data related to a BIS event indicated by a PTO by applying different attributes (e.g., different data rates, bitrates, and/or transmission power) to the first data and the second data. According to an embodiment, the source electronic device may broadcast a plurality of payloads in each of BIS event(x) to BIS event(x+5).

In BIS event(x), for example, "P0, P0" related to BIS event(x) may be transmitted with a first attribute (e.g., a first bitrate and/or first transmission power), and "P2" related to BIS event(x+ 2) and pre-transmitted in BIS event(x) may be transmitted with a second attribute (e.g., second bitrate and/or second transmission power). In BIS event(x+1), "P1, P1" related to BIS event(x+1) may be transmitted with the first attribute, and "P3" related to BIS event(x+3) and pre-transmitted in BIS event(x+1) may be transmitted with the second attribute. In BIS event(x+2), "P2, P2" related to BIS event(x+2) may be transmitted with the first attribute, and "P4" related to BIS event(x+4) and pre-transmitted in BIS event(x+2) may be transmitted with the second attribute.

Referring to FIG. 13B, when BIS=2, BN=2, IRC=2, PTO=2, and NSE=6, data may be transmitted with three different attributes based on a PTO. In a first ISO interval, ISO_Interval, for example, "L0, R0, L1, R1, L0, R0, L1, R1" may be transmitted with a first attribute, "L4, R4" may be transmitted with a second attribute, and "L5, R5" may be transmitted with a third attribute.

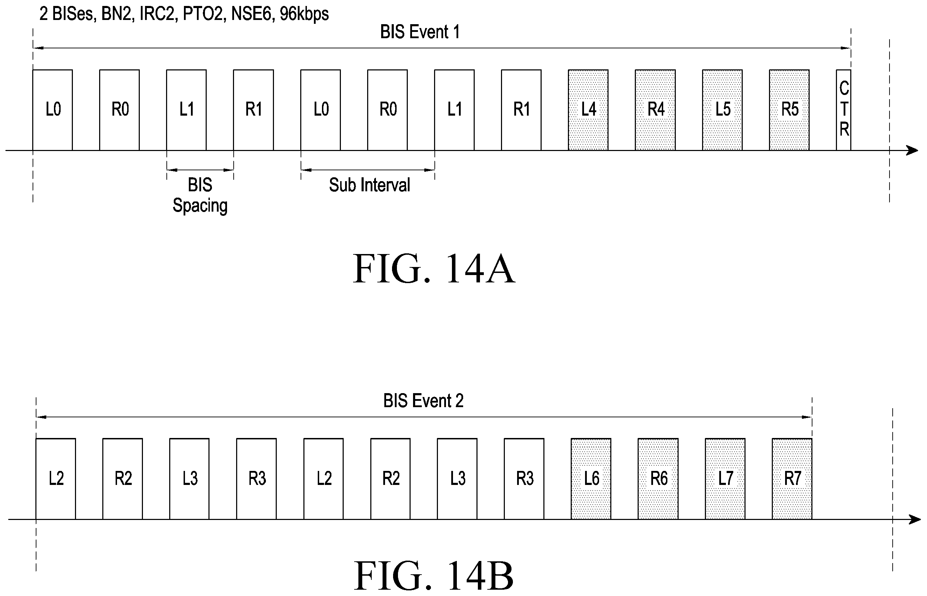

FIGS. 14A to 14C illustrate examples of transmitting BIS data by an electronic device according to an embodiment.

The electronic device may transmit BIS data based on information included in BIG information, BIGInfo transmitted in AUX_SYNC_IND. The electronic device may transmit the BIS data based on at least one of Num BIS, NSE, BN, Sub Interval, PTO, BIS Spacing, IRC, Max PDU, SDU Interval, Max SDU Size, Channel Map, PHY, or Framing method included in BIGInfo.

According to an embodiment, the electronic device may transmit the BIS data with internally predefined transmission power. According to an embodiment, each BIS parameter may be different according to the type of a BIS service to be performed. For example, when high-quality transmission is required such as a media type, or low-quality notification transmission is required such as a repetitive warning message, an operation may be performed based various subdivided BIS parameters.

For example, when Num BIS=2, NSE=6, ISO Interval=20ms, IRC=2, PTO=2, Unframing, BIS Spacing=674$\mu$s, Sub Interval=1.348ms, SDU Interval=10ms, Max SDU Size=120 bytes, and PHY LE=2M in BIGInfo, and the transmission power is set to 14dBm, the electronic device may transmit the BIS data with the corresponding BIS parameters and transmission power. In this case, the BIS service may be performed by external electronic devices within an area covered by 14dBm at a bitrate of 96kbps.

FIGS. 14A to 14C illustrate examples of transmission of BIS audio data with BIS Num=2, BN=2, NSE=6, IRC=3, PTO=2, and an ISO interval of 20ms. Referring to FIG. 14A, in BIS event 1, all or some of "L0, R0, L1, R1, L0, R0, L1, R1" related to a current BIS event may be transmitted with a first attribute, all or some of "L4, R4, L5, R5" related to a BIS event indicated by a PTO may be transmitted with a second attribute, and "CTR" may be transmitted with a third attribute. According to an embodiment, when a channel condition is changed, the source electronic device may transmit CTR including channel information. In FIG. 14A, all or some of "L0, R0, L1, R1, L0, R0, L1, R1" related to the current BIS event may be referred to as first BIS data, and all or some of "L4, R4, L5, R5" related to the BIS event indicated by the PTO may be referred to as second BIS data.

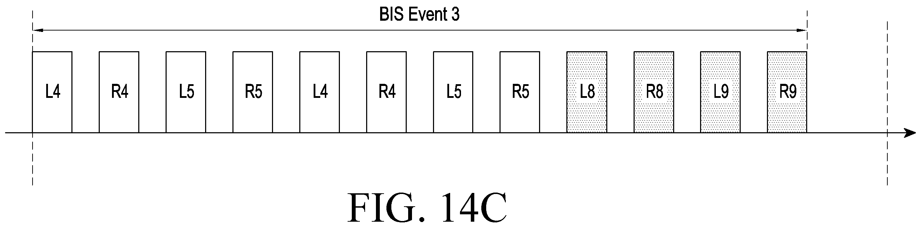

Referring to FIG. 14B, in BIS event 2, "L2, R2, L3, R3, L2, R2, L3, R3" related to a current BIS event may be transmitted with a first attribute and "L6, R6, L7, R7" related to a BIS event indicated by a PTO may be transmitted with a second attribute. Referring to FIG. 14C, in BIS event 3, "L4, R4, L5, R5, L4, R4, L5, R5" related to a current BIS event may be transmitted with the first attribute, and "L8, R8, L9, R9" related to a BIS event indicated by a PTO may be transmitted with the second attribute.

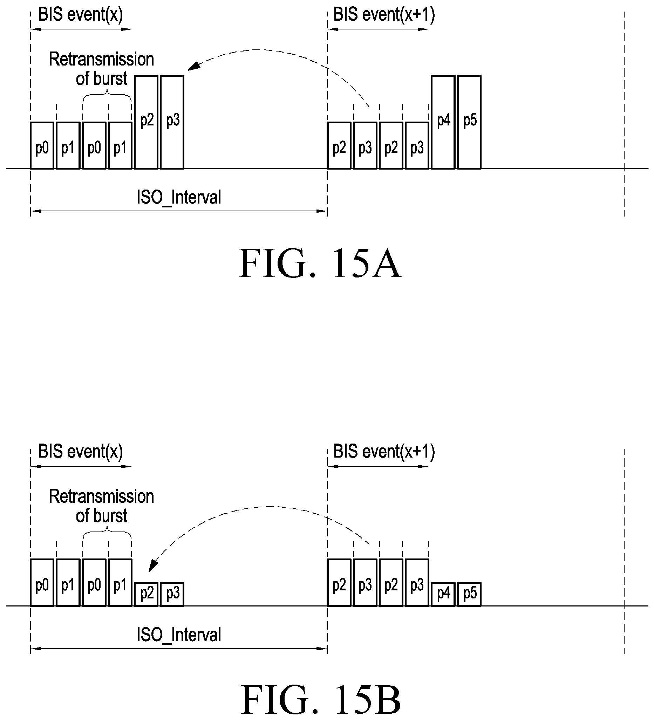

FIG. 15A illustrates an example of transmission of payload in a BIS according to an embodiment.

Referring to FIG. 15A, in BIS event(x), payloads p0 and p1 may be transmitted with a first attribute (e.g., a first bitrate and first transmission power), and when IRC=2, the payloads p0 and p1 may be transmitted once more with the first attribute (e.g., the first bitrate and the first transmission power) (retransmissions of a burst) in BIS event(x). When PTO=1, payloads p2 and p3 to be transmitted in BIS event(x+1) may be pre-transmitted with a second attribute (e.g., a first bitrate and second transmission power) in BIS event(x). According to an embodiment, the payloads p2 and p3 pre-transmitted in BIS event(x) may be transmitted at the same bitrate with higher transmission power than the payloads p0 and p1. In BIS event(x+1), the payloads p2 and p3 may be transmitted with the first attribute (e.g., the first bitrate and the first transmission power), and when IRC=2, the payloads p2 and p3 may be transmitted once more with the first attribute (e.g., the first bitrate and the first transmission power) (retransmissions of a burst) in BIS event(x+1). When PTO=1, payloads p4 and p5 to be transmitted in BIS event(x+2) may be pre-transmitted with the second attribute (e.g., the first bitrate and the second transmission power) in BIS event(x+1). According to an embodiment, the payloads p4 and p5 pre-transmitted in BIS event(x+1) may be transmitted with higher transmission power than the payloads p2 and p3.

FIG. 15B illustrates an example of transmission of payload in a BIS according to an embodiment.

Referring to FIG. 15B, payloads p0 and p1 may be transmitted with a first attribute (e.g., a first bitrate and first transmission power) in BIS event(x), and when IRC=2, the payloads p0 and p1 may be transmitted once more with the first attribute (e.g., the first bitrate and the first transmission power) in BIS event(x) (retransmissions of a burst). When PTO=1, payloads p2 and p3 to be transmitted in BIS event(x+1) may be pre-transmitted with a second attribute (e.g., the first bitrate and second transmission power) in BIS event(x). According to an embodiment, the payloads p2 and p3 pre-transmitted in BIS event(x) may be transmitted at the same bitrate with lower transmission power than the payloads p0 and p1. The payloads p2 and p3 may be transmitted with the first attribute (e.g., the first bitrate and the first transmission power) in BIS event(x+1), and when IRC=2, the payloads p2 and p3 may be transmitted once more with the first attribute (e.g., the first bitrate and the first transmission power) in BIS event(x+1) (retransmissions of a burst). When PTO=1, payloads p4 and p5 to be transmitted in BIS event(x+2) may be pre-transmitted with the second attribute (e.g., the first bitrate and the second transmission power) in BIS event(x+1). According to an embodiment, the payloads p4 and p5 pre-transmitted in BIS event(x+1) may be transmitted at the same bitrate with lower transmission power than the payloads p2 and p3. According to an embodiment, when data (or payload) to be transmitted in the current BIS even(x) is transmitted with higher transmission power than data (or payload) indicated by a PTO and thus pre-transmitted in BIS event(x), the BIS source device may provide a service of the current BIS event(x) to BIS sink devices in wider coverage.

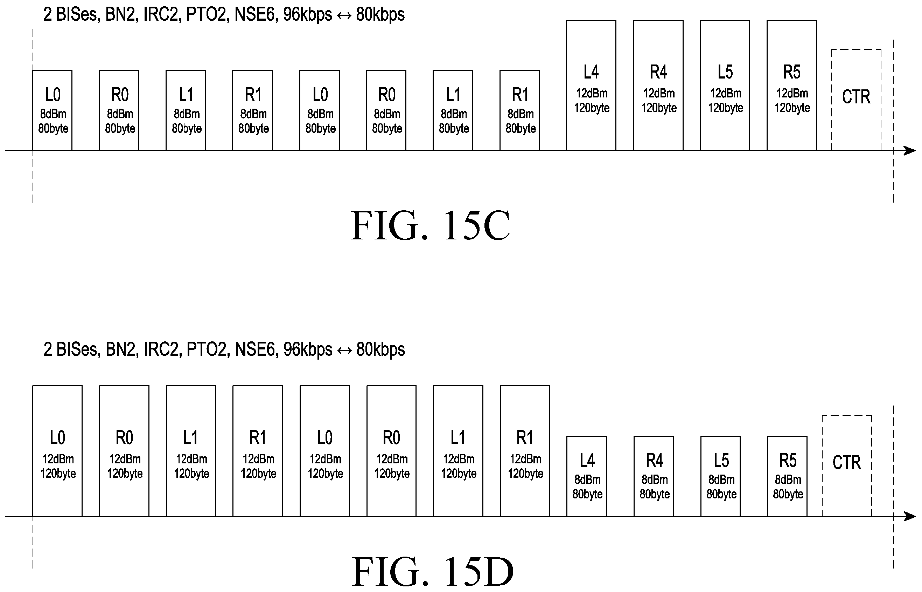

FIGS. 15C and 15D illustrate examples of increasing a bitrate and transmission power of some data by an electronic device according to an embodiment.

Bitrates (96kbps and 80kbps) and transmission power (8dBM and 12dBM) illustrated in FIGS. 15C and 15D are merely exemplary, for convenience of description, and a bitrate and transmission power may be set to various values depending on implementation. For example, assuming that a PDU size is 120bytes and an ISO interval is 10ms, the bitrate may be 96kbps (120 bytes=960 bits and 96,000 bits/second => 96kbps). BIS parameter setting values illustrated in FIGS. 15C and 15D are merely exemplary, for convenience of description, and various BIS parameter setting values may be set depending on implementation.

The electronic device may transmit PDUs related to a current BIS event with a second attribute rather than a first attribute (e.g., a specified PDU size (or bitrate) and/or specified transmission power). According to an embodiment, when pre-transmitted PDUs indicated by a PTO are determined to be transmitted with a different attribute, general BIS data may be transmitted with the first attribute and the data indicated by the PTO may be transmitted with the second attribute. According to an embodiment, the first attribute may be higher than the second attribute in terms of bitrate and/or transmission power. According to an embodiment, the first attribute may be lower than the second attribute in terms of bitrate and/or transmission power.

Referring to FIG. 15C, for example, when BIS parameters are set such that BIS Num=2, BN=2, NSE=6, IRC=2, and PTO=2, the electronic device may transmit data ("L4, R4, L5, R5") indicated by a PTO at a higher bitrate (e.g. 96kbps) with higher transmission power (e.g. 12dBM) than general BIS data ("L0, R0, L1, R1, L0, R0, L1, R1"). This is a method based on the property that when BIS sink electronic devices receive pre-transmitted PDUs, they may not receive additionally retransmitted corresponding PDUs, and enables the BIS sink electronic devices to have a higher reception success rate and maintain higher sound quality. According to an embodiment, the pre-transmitted data ("L4, R4, L5, R5") indicated by the PTO may be transmitted based on a first attribute (e.g., transmission power: 12dBM and PDU size: 120bytes), and the general BIS data ("L0, R0, L1, R1, L0, R0, L1, R1") may be transmitted based on a second attribute (e.g., transmission power: 8dBM and PDU size: 80bytes). According to an embodiment, the electronic device may transmit control data CTR with a third attribute different from the first attribute and the second attribute. According to an embodiment, the electronic device may transmit the control data CTR based on the same first attribute as used for the pre-transmitted data indicated by the PTO.

Referring to FIG. 15D, for example, when BIS parameters are set such that BIS Num=2, BN=2, NSE=6, IRC=2, and PTO=2, the electronic device may transmit data ("L4, R4, L5, R5") indicated by a PTO at a lower bitrate (e.g. 80kbps) with lower transmission power (e.g., 8dBM) than general BIS data ("L0, R0, L1, R1, L0, R0, L1, R1"). This may be done to secure the flexibility of an internal scheduler by lowering the priority of pre-transmitted PDUs indicated by a PTO in a situation of coexistence with WiFi or BT concurrency. According to an embodiment, the data ("L4, R4, L5, R5") indicated by the PTO may be transmitted based on a first attribute (e.g., transmission power: 8dBM and PDU size: 80bytes), and the general BIS data ("L0, R0, L1, R1, L0, R0, L1, R1") may be transmitted based on a second attribute (e.g., transmission power: 12dBM and PDU size: 120bytes). According to an embodiment, the electronic device may transmit control data CTR with a third attribute different from the first attribute and the second attribute. According to an embodiment, the electronic device may transmit the control data CTR based on the same first attribute as used for the pre-transmitted data indicated by the PTO.

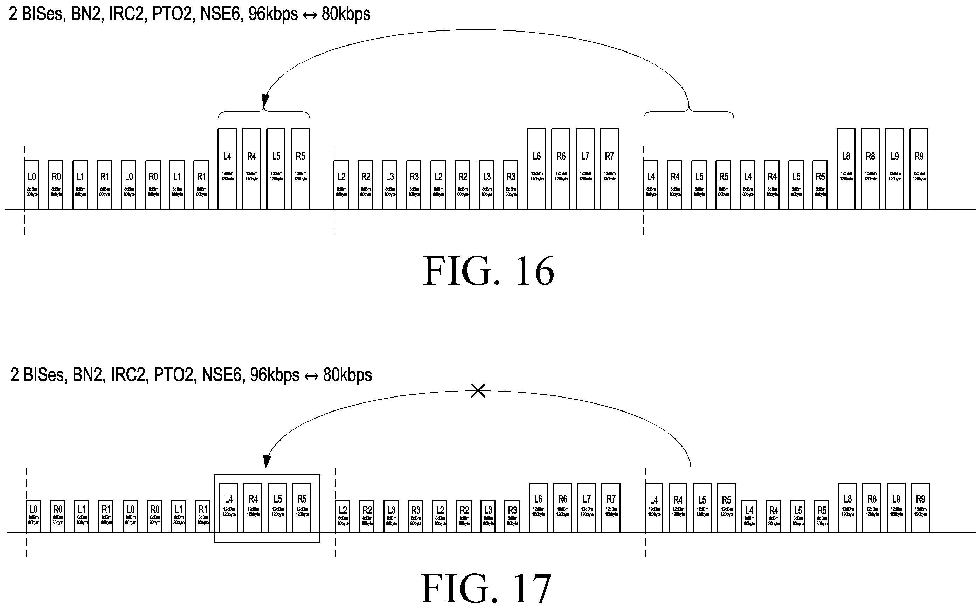

PDU sizes (or bitrates) and transmission power illustrated in FIGS. 16 to 26B are merely exemplary, for convenience of description, and a bitrate and transmission power may be set to various values depending on implementation. BIS parameter setting values illustrated in FIGS. 16 to 26B are merely exemplary, for convenience of description, and various BIS parameter setting values may be set depending on implementation.

FIG. 16 illustrates an example of intervals in case that the electronic device increases the bitrate and transmission power of some data according to an embodiment.

Referring to FIG. 16, for example, when BIS parameters are set such that BIS Num=2, BN=2, IRC=2, PTO=2, and NSE=6, the electronic device may transmit pre-transmitted data (e.g. "L4, R4, L5, R5") indicated by a PTO at a higher bitrate (e.g. 96kbps) with higher transmission power (e.g., 12dBm) than general BIS data (e.g. "L0, R0, L1, R1, L0, R0, L1, R1"), in one interval.

In a first interval, data ("L4, R4, L5, R5") indicated by a PTO and thus pre-transmitted may be transmitted based on a first attribute (e.g., 12dBm and 120 bytes), and general BIS data ("L0, R0, L1, R1, L0, R0, L1, R1") may be transmitted based on a second attribute (e.g., 8dBM and 80 bytes). In a second interval, data ("L6, R6, L7, R7") indicated by a PTO and thus pre-transmitted may be transmitted based on the first attribute (e.g., 12dBm and 120 bytes), and general BIS data ("L2, R2, L3, R3, L2, R2, L3, R3") may be transmitted based on the second attribute (e.g., 8dBM and 80bytes). In a third interval, data ("L8, R8, L9, R9") indicated by a PTO and thus pre-transmitted may be transmitted based on the first attribute (e.g., 12dBm and 120 bytes), and general BIS data ("L4, R4, L5, R5, L4, R4, L5, R5") may be transmitted based on the second attribute (e.g., 8dBM and 80 bytes).

FIG. 17 illustrates an example of adjusting the bitrate and transmission power of general BIS data in case that an electronic device fails to transmit data related to a PTO according to an embodiment.

Referring to FIG. 17, for example, when BIS parameters are set such that BIS Num=2, BN=2, IRC=2, PTO=2, and NSE=6, in case that the electronic device (or the BIS source electronic device) fails to transmit data ("L4, R4, L5, R5") indicated by a PTO and thus pre-transmitted, the electronic device may transmit "L4, R4, L5, R5" that it has failed to transmit in the first interval as general BIS data in a third interval by applying an attribute (a bitrate and transmission power) set for the data indicated by the PTO in the first interval.

According to an embodiment, when expecting occurrence of a situation in which specific PDUs may not be transmitted, the electronic device may additionally adjust the bitrate and/or transmission power. For example, when data indicated by a PTO is transmitted with priority, in case of higher coexistence with Wi-Fi and BT concurrency than a CIS at that time, CIS transmission may be failed. In this case, PDUs that have not been transmitted as data indicated by a PTO may be transmitted with an attribute applied to the data indicated by the PTO, at the time of normal transmission. This may be done for maintaining the attribute of high sound quality and/or high power intended for the data indicated by the PTO.

According to an embodiment, the electronic device may change an attribute (e.g., a bitrate and/or transmission power) intended for a PDU indicated by a PTO, which has been failed in transmission, and transmit the PDU at a normal transmission time. According to an embodiment, the electronic device may repeatedly transmit the failed PDU indicated by the PTO by gradually increasing a part of the attribute (e.g., the bitrate and/or the transmission power) for the PDU. According to an embodiment, the electronic device may repeatedly transmit the failed PDU indicated by the PTO by gradually decreasing a part of the attribute (e.g., the bitrate and/or the transmission power) for the PDU.

According to an embodiment, the external electronic device may receive only some BIS data transmitted by the electronic device, not all BIS data. For example, when the external electronic device has successfully received a specific PDU pre-transmitted through a PTO, it may not open Rx for a corresponding subevent in an ISO interval in which the corresponding PDU is transmitted. The external electronic device may not always receive BIS data of the same bitrate according to transmission of BIS data from the electronic device.

According to an embodiment, when the electronic device transmits a PTO at a high bitrate with high transmission power by giving priority to a PTO group and transmits general BIS data at a low bitrate with low transmission power, the external electronic device may successfully receive PDUs transmitted through the PTO in a clean environment, and thus receive the BIS data of the high bit rate and output high-quality audio. According to an embodiment, since the external electronic device has difficulty in successfully receiving the PDUs transmitted through the PTO in a busy environment, it may receive the general BIS data and thus receive the BIS data of the low bitrate, but without sound interruptions.

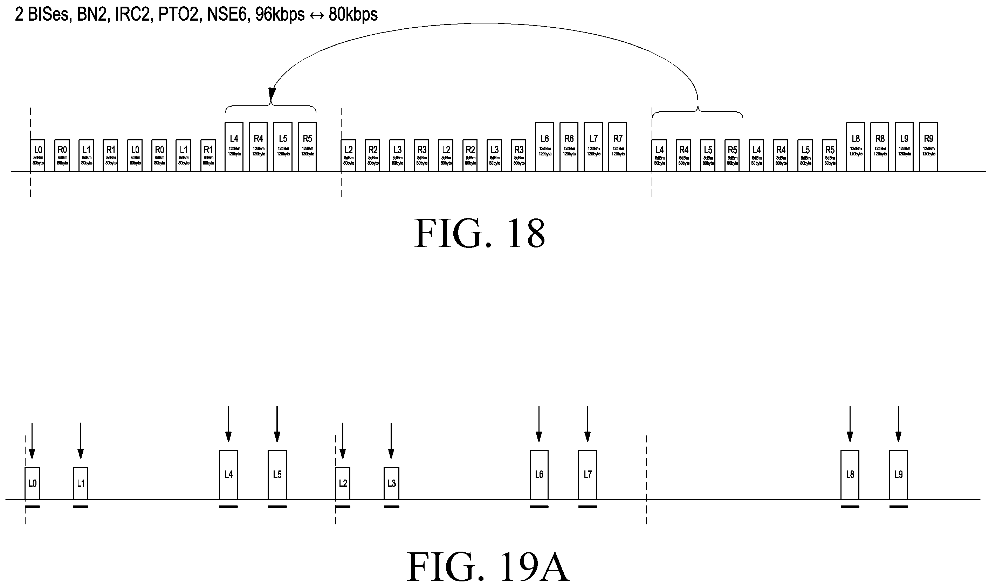

FIG. 18 illustrates an example of transmitting BIS data by an electronic device according to an embodiment.

Referring to FIG. 18, for example, when BIS parameters are set such that BIS Num=2, BN=2, IRC=2, PTO=2, and NSE=6, the electronic device may transmit data (e.g. "L4, R4, L5, R5") indicated by a PTO and thus pre-transmitted at a higher bitrate with higher transmission than general BIS data (e.g. "L0, R0, L1, R1, L0, R0, L1, R1") in one interval.

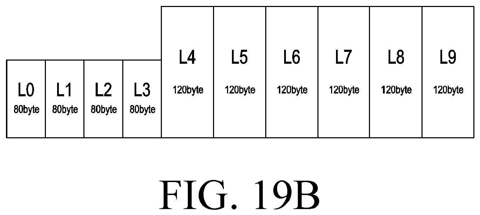

FIG. 19A illustrates an example of selectively receiving BIS data in a clean environment by an electronic device, and FIG. 19B illustrates an example of a reception buffer in case that an electronic device selectively receives BIS data in a clean environment.

In a clean environment, an external electronic device (e.g. a BIS sink electronic device) may selectively receive some of BIS data transmitted by an electronic device (e.g. a BIS source electronics), thereby minimizing received data redundancy.

Referring to FIGS. 18 and 19A, the external electronic device (e.g., one of the second electronic device 310, the third electronic device 320, the fourth electronic device 330, the fifth electronic device 340, the sixth electronic device 350, and the seventh electronic device 360 in FIG. 3) may receive current BIS data "L0, L1" and BIS data "L4, L5" indicated by a PTO in a first interval. In a second interval, the external electronic device may receive current BIS data "L2, L3" and BIS data "L6, L7" indicated by a PTO. In a third interval, the external electronic device may receive BIS data "L8, L9" indicated by a PTO without receiving current BIS data.

Referring to FIGS. 18, 19A, and 19B, the external electronic device may successfully receive all of the BIS data L0 to L9 in a clean environment and store the BIS data in a reception buffer. According to an embodiment, "L0, L1, L2, L3" among the BIS data may be received as the current BIS data in each corresponding interval, and "L4, L5, L6, L7, L8, and L9" among the BIS data may be received as BIS data indicated by a PTO in each corresponding interval. For example, each of "L0, L1, L2, and L3" among the BIS data may be 80 bytes, and each of "L4, L5, L6, L7, L8, and L9" among the BIS data may be 120 bytes.

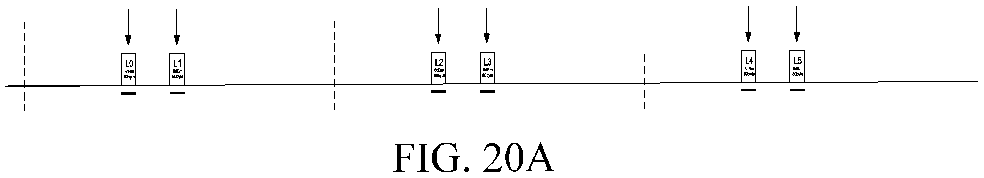

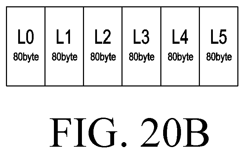

FIG. 20A illustrates an example of selectively receiving BIS data in a busy environment by an electronic device according to an embodiment, and FIG. 20B illustrates an example of a reception buffer in case that the electronic device selectively receives BIS data in a busy environment.

An external electronic device (e.g., a BIS sink electronic device) may selectively receive some of BIS data transmitted by an electronic device (e.g., a BIS source electronic device) in a busy environment.

Referring to FIGS. 18 and 20A, in a first interval, the external electronic device may receive only current BIS data "L0, L1" without receiving BIS data indicated by a PTO. In a second interval, the external electronic device may receive only current BIS data "L2, L3" without receiving BIS data indicated by a PTO. In a third interval, the external electronic device may receive only current BIS data "L4, L5" without receiving BIS data indicated by a PTO.

Referring to FIGS. 18, 20A, and 20B, the external electronic device may successfully receive the BIS data L0 to L5 and store the BIS data in a reception buffer. According to an embodiment, L0 to L5 among the BIS data may be received as the current BIS data in each corresponding interval. For example, each of L0 to L5 among the BIS data may be 80 bytes.

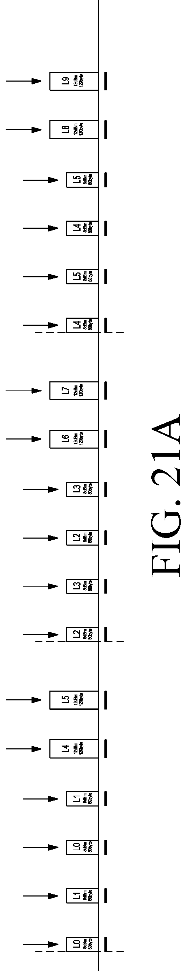

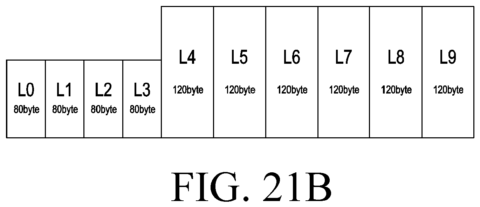

FIG. 21A illustrates an example of mandatorily receiving BIS data by an electronic device according to an embodiment, and FIG. 21B illustrates an example of a reception buffer in case that an electronic device mandatorily receives BIS data according to an embodiment.

An external electronic device (e.g., a BIS sink electronic device) may mandatorily receive all BIS data transmitted by an electronic device (e.g., a BIS source electronic device) and store the received data in a reception buffer.

Referring to FIGS. 18 and 21A, the external electronic device may receive current BIS data "L0, L1, L0, L1" and BIS data "L4, L5" indicated by a PTO in a first interval. In a second interval, the external electronic device may receive current BIS data "L2, L3, L2, L3" and BIS data "L6, L7" indicated by a PTO. In a third interval, the external electronic device may receive current BIS data "L4, L5, L4, L5" and BIS data "L8, L9" indicated by a PTO.

Referring to FIGS. 18, 21A, and 21B, the external electronic device may successfully receive all of the BIS data L0 to L9 and store them in a reception buffer. According to an embodiment, "L0, L1, L2, L3" among the BIS data may be received as the current BIS data in each corresponding interval, and "L4, L5, L6, L7, L8, and L9" among the BIS data may be received as BIS data indicated by a PTO in each corresponding interval. For example, each of "L0, L1, L2, and L3" among the BIS data may be 80 bytes, and each of "L4, L5, L6, L7, L8, and L9" among the BIS data may be 120 bytes.

Because the BIS source electronic device should to perform repeated audio data transmissions and periodic advertising at the same time, it may have difficulty in providing a stable BIS service for a long time in the electronic device having limited RF resources and a limited battery capacity.

For example, when a mobile phone supports the BIS service, it may have to fixedly use some of RF resources for BIS audio data transmission and additionally broadcast transmission information about BIS audio data. Moreover, the mobile phone has no way to respond to changes in a surrounding wireless environment and should use a fixed bitrate due to difficulty in using a variable bitrate, when performing the BIS service. Therefore, issues such as the resulting current consumption, coexistence with WiFi, or sound interruptions may be generated.

According to an embodiment, an electronic device (e.g., the electronic device 101 of FIG. 1; the first electronic device 300 of FIG. 3) may include a communication circuit (e.g., the communication module 190 of FIG. 1) and at least one processor (e.g., the processor 120 of FIG. 1) connected to the communication circuit. The at least one processor may control to broadcast an advertising message including information about a first bitrate and first transmission power used to transmit BIS data. The at least one processor may control to transmit first BIS data based on a second bitrate and second transmission power in a first interval. The at least one processor may control to transmit second BIS data based on a third bitrate and third transmission power in the first interval.

According to an embodiment, the first BIS data may be data related to a current BIS event, and the second BIS data may be data related to a BIS event indicated by a PTO. According to an embodiment, the second bit rate may be set greater than the first bitrate, and the second transmission power may be set higher than the first transmission power.

According to an embodiment, the advertising message may further include at least one of the number of BISs, a burst number (BN), the number of subevents per BIS, the number of groups carrying data related to a current BIS event, a PTO, or a time value between adjacent anchor points.

According to an embodiment, the first BIS data may be audio data related to a current BIS event, and the second BIS data may be control data related to the current BIS event.

According to an embodiment, the at least one processor may set a first group including BIS data to be transmitted based on the second bitrate and the second transmission power in the first interval. According to an embodiment, the at least one processor may set a second group including BIS data to be transmitted based on the third bitrate and the third transmission power in the first interval.

According to an embodiment, the at least one processor may determine the third bitrate and the third transmission power based on quality of the second BIS data.

According to an embodiment, an electronic device (e.g., the electronic device 101 of FIG. 1; any one of the second electronic device 310 to the seventh electronic device 360 of FIG. 3) may include a communication circuit (e.g., the communication module 190 of FIG. 1) and at least one processor (e.g., the processor 120 of FIG. 1) connected to the communication circuit. The at least one processor may receive an advertising message including information about a first bitrate and first transmission power used to transmit BIS data. The at least one processor may receive first BIS data transmitted based on a second bitrate and second transmission power in a first interval. The at least one processor may receive second BIS data transmitted based on a third bitrate and third transmission power in the first interval.

According to an embodiment, the at least one processor may selectively receive some of the first BIS data transmitted based on the second bitrate and the second transmission power in the first interval. According to an embodiment, the at least one processor may selectively receive some of the second BIS data transmitted based on the third bitrate and the third transmission power in the first interval. According to an embodiment, the at least one processor may store successfully received data out of the first BIS data and successfully received data out of the second BIS data in a buffer.

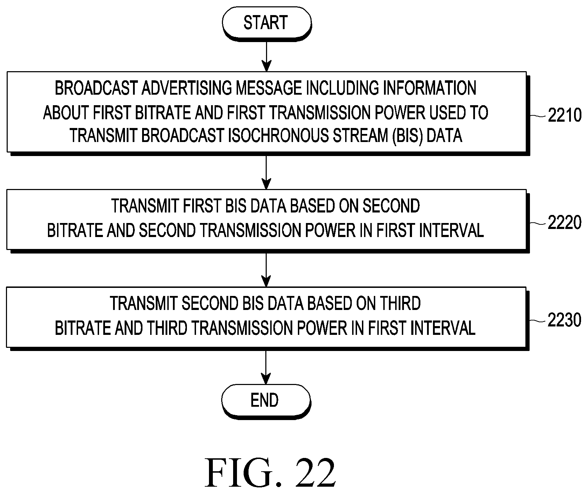

FIG. 22 illustrates a method of operating an electronic device according to an embodiment of the disclosure.

Referring to FIG. 22[KIMKH2], in operation 2210, an electronic device (e.g., the electronic device 101 of FIG. 1 or the first electronic device 300 of FIG. 3) broadcasts an advertising message including information about a first bitrate and first transmission power to transmit BIS data. According to one embodiment, the advertising message may be a periodic advertising train including BIG information (BIGInfo) shown in FIG. 9. According to an embodiment, the information about the first bit rate and the first transmission power included in the advertising message may be a plurality of BIG parameters. According to an embodiment, the information about the first bit rate included in the advertising message may be a Max SDU field. The Max SDU field means the maximum transmittable data size. For example, assuming that the Max SDU is 120 bytes and the ISO Interval is 10 ms, the bitrate may be 96 kbps (120 bytes = 960 bits, 96,000 bits/second => 96 kbps).

In operation 2220[KIMKH3], the electronic device transmits first BIS data based on a second bitrate and second transmission power in a first interval. According to an embodiment, the second bit rate may be set to be less than or equal to the first bit rate, and the second transmission power may be set to be less than or equal to the first transmission power. In operation 2230, the electronic device transmits second BIS data based on a third bitrate and third transmission power in the first interval. According to an embodiment, the third bit rate may be set to be less than or equal to the first bit rate, and the third transmission power may be set to be less than or equal to the first transmission power. According to an embodiment, at least one external electronic device synchronizes with the BIS using timing information included in the advertising message and then receives the first BIS data and/or the second BIS data. According to an embodiment, at least one external electronic device may confirm that BIS data can be transmitted with a bit rate less than or equal to the first bit rate and a transmission power less than or equal to the first transmission power from the electronic device based on the information about the first bit rate and the first transmission power included in the advertising message.

According to an embodiment, a computer-readable storage medium storing at least one instruction may be provided. When executed by at least one processor, the at least one instruction may cause an electronic device to perform a plurality of operations. The plurality of operations may include broadcasting an advertising message including information about a first bitrate and first transmission power used to transmit BIS data. The plurality of operations may include transmitting first BIS data based on a second bitrate and second transmission power in a first interval. The plurality of operations may include transmitting second BIS data based on a third bitrate and third transmission power in the first interval.

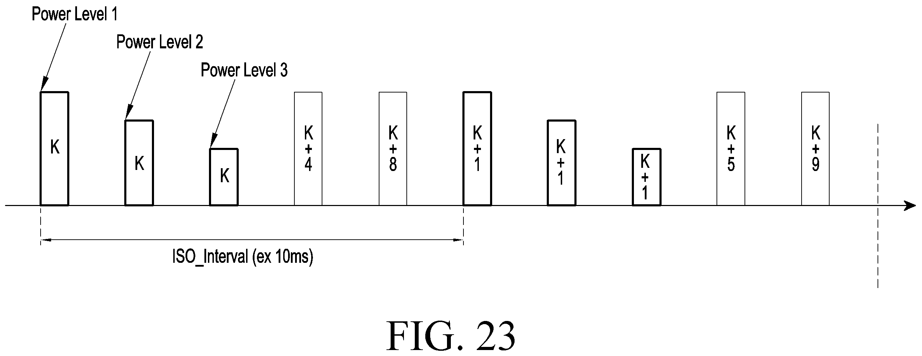

Figures 23 to 26B illustrate examples when the BIS source electronic device applies the variable transmission attributes to some BIS events. As a result, the success rate of audio data reception of a BIS sink electronic device may be increased, current consumption caused by unnecessary reception may be reduced, and sound interruptions may be reduced, thereby providing a stable service to a user.

FIG. 23 illustrates an example of fine control of BIS data by an electronic device according to an embodiment.

Referring to FIG. 23, an electronic device (or BIS source device) may transmit general BIS data K to be transmitted in a corresponding BIS event a preset number of times (e.g., three times), and transmit data K+4 and K+8 indicated by a PTO and thus pre-transmitted, in a first interval, ISO_Interval. The electronic device may adjust the transmission power and/or bitrate of each of the general BIS data according to a transmission order and/or a set time interval of the general BIS data. According to an embodiment, the electronic device may set transmission power for first general BIS data K to "power level 1", transmission power for second general BIS data K to "power level 2", and transmission power for third general BIS data K to "power level 3" in the first interval. According to an embodiment, "power level 1" may be set greater than "power level 2", and "power level 2" may be set greater than "power level 3".

The electronic device (or the BIS source device) may transmit general BIS data K+1 to be transmitted in a corresponding BIS event a preset number of times (e.g., three times), and transmit data K+5 and K+9 indicated by a PTO and thus pre-transmitted, in a second interval. The electronic device may adjust the transmission power and/or bitrate of each of the general BIS data according to a transmission order and/or a set time interval of the general BIS data in the second interval. According to an embodiment, the electronic device may adjust the transmission power and/or bitrate of each general BIS data to be transmitted in a corresponding BIS event in every interval, ISO_Interval. According to an embodiment, the electronic device may adjust the transmission power and/or bitrate of each general BIS data to be transmitted in a corresponding BIS event in a preset interval.

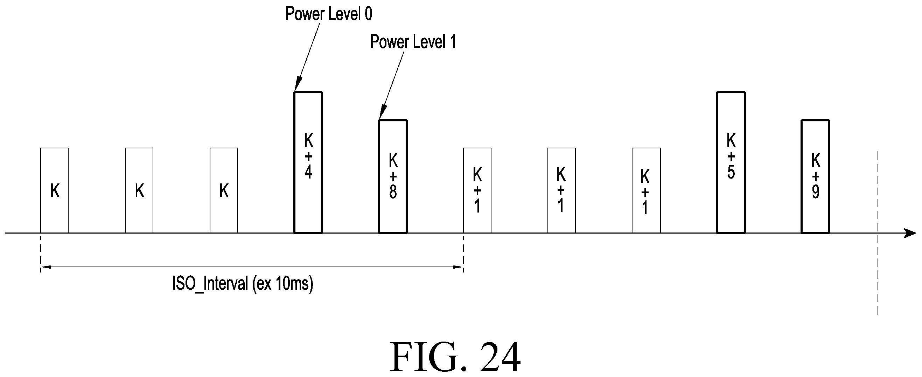

FIG. 24 illustrates another example of fine control of BIS data by an electronic device according to an embodiment.

Referring to FIG. 24, an electronic device (or BIS source device) may transmit general BIS data K to be transmitted in a corresponding BIS event a preset number of times (e.g., three times) and transmit data K+4 and K+8 indicated by a PTO and thus pre-transmitted, in a first interval, ISO_Interval. The electronic device may adjust the transmission power and/or bitrate of each of the data indicated by the PTO according to a transmission order and/or a set time interval of the data indicated by the PTO. According to an embodiment, the electronic device may set transmission power for first data K+4 indicated by a PTO to "power level 1", and transmission power for second data K+8 indicated by a PTO to "power level 2".

The electronic device (or the BIS source device) may transmit general BIS data K+1 to be transmitted in a corresponding BIS event a preset number of times (e.g., three times) and transmit data K+5 and K+9 indicated by a PTO and thus pre-transmitted, in a second interval. The electronic device may adjust the transmission power and/or bitrate of each of the data indicated by the PTO according to a transmission order and/or a set time interval of the data indicated by the PTO in the second interval. According to an embodiment, the electronic device may adjust the transmission power and/or bitrate of each data indicated by a PTO in every interval, ISO_Interval. According to an embodiment, the electronic device may adjust the transmission power and/or bitrate of each data indicated by a PTO in a predetermined interval.

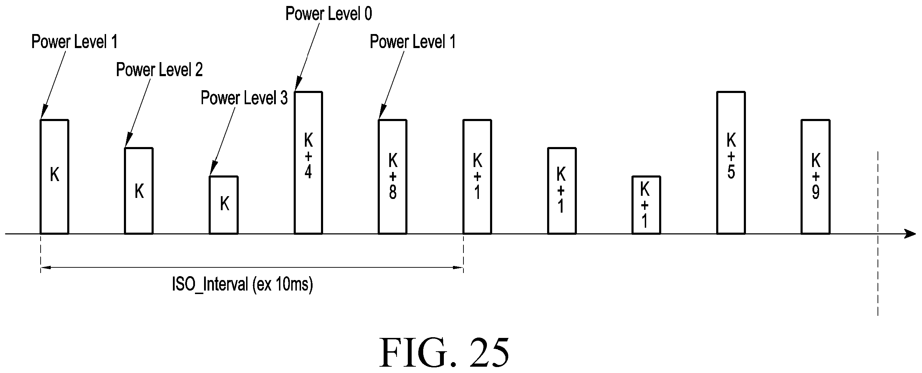

FIG. 25 illustrates another example of fine control of BIS data by an electronic device according to an embodiment.

Referring to FIG. 25, an electronic device (or BIS source device) may transmit general BIS data K to be transmitted in a corresponding BIS event a preset number of times (e.g., three times) and transmit data K+4 and K+8 indicated by a PTO and thus pre-transmitted, in a first interval, ISO_Interval. The electronic device may adjust the transmission power and/or bitrate of each of the general BIS data and the data indicated by the PTO according to a transmission order and/or a set time interval of each of the general BIS data and the data indicated by the PTO. According to an embodiment, in the first interval, the electronic device may set transmission power for first general BIS data K to "power level 1", transmission power for second general BIS data K to "power level 2", transmission power for third general BIS data K to "power level 3", transmission power for first data K+4 indicated by a PTO to "power level 0", and transmission power for second data K+8 indicated by a PTO to "power level 2". According to an embodiment, "power level 0" may be set greater than "power level 1", "power level 1" may be set greater than "power level 2", and "power level 2" may be set greater than "power level 3".

The electronic device (or the BIS source device) may transmit general BIS data K+1 to be transmitted in a corresponding BIS event a preset number of times (e.g., three times) and transmit data K+5 and K+9 indicated by a PTO and thus pre-transmitted, in a second interval. According to an embodiment, the electronic device may adjust the transmission power and/or bitrate of each of the general BIS data and the data indicated by the PTO in every interval, ISO_Interval. According to an embodiment, the electronic device may adjust the transmission power and/or bitrate of each of the general BIS data and the data indicated by the PO in a predetermined interval.

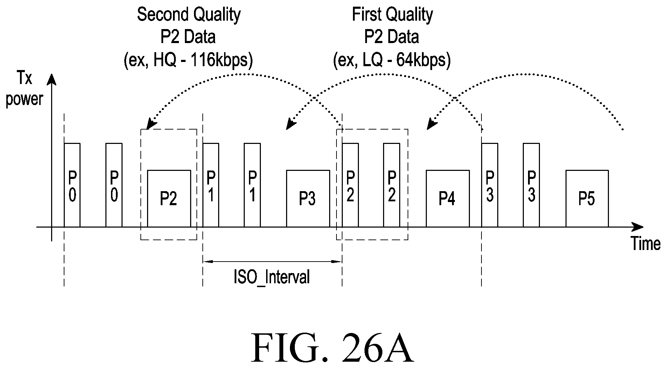

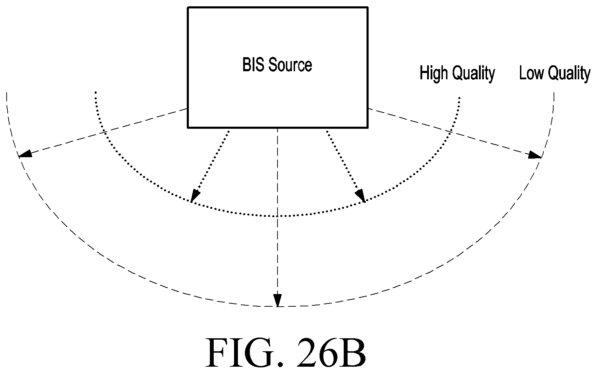

FIGS. 26A and 26B are diagrams illustrating an operation effect of an electronic device according to an embodiment.

Referring to FIG. 26A, an electronic device (or a BIS source device) may transmit general BIS data (or payload) P0 to be transmitted in a corresponding BIS event with first quality (e.g., 64kbps) a predetermined number of times (e.g., twice) in a first interval, ISO_Interval. The electronic device may transmit data P2, which is indicated by a PTO and thus pre-transmitted, with second quality (e.g., 116kbps) in the first interval. According to an embodiment, the first quality for the general BIS data may have a lower bitrate (i.e., lower quality) and higher transmission power than the second quality for the data indicated by the PTO. According to an embodiment, the first quality for the general BIS data may be set to low quality and the second quality for the data indicated by the PTO may be set to high quality.

The electronic device may transmit general BIS data (or payload) P1 to be transmitted in a corresponding BIS event, with the first quality (e.g., 64kbps) a preset number of times (e.g., twice) in a second interval. The electronic device may transmit data P3, which is indicated by a PTO and thus pre-transmitted, with the second quality (e.g., 116kbps) in the second interval.

Referring to FIGS. 26A and 26B, the electronic device (BIS source) may transmit high-quality data indicated by a PTO and transmit low-quality general BIS data. According to an embodiment, the high-quality data indicated by the PTO may be transmitted based on a high bitrate and/or low transmission power, and coverage through which a BIS receiving device may receive the data may be set to be small. According to an embodiment, the low-quality general BIS data may be transmitted based on a low bitrate and/or high transmission power, and coverage through which the BIS receiving device may receive the data may be set large.

According to an embodiment, the electronic device (BIS source) may transmit high-quality BIS data and transmit low-quality data indicated by a PTO. According to an embodiment, the high-quality general BIS data may be transmitted based on a high bitrate and/or low transmission power, and coverage through which the BIS receiving device may receive the data may be set to be small. According to an embodiment, the low-quality data indicated by the PTO may be transmitted based on a low bitrate and/or high transmission power, and coverage through which the BIS receiving device may receive the data may be set large.

FIGS. 26A and 26B illustrate examples that the low-quality BIS data may have a greater coverage than the high-quality BIS data. The electronics device may also recommend corrective measures (e.g. adjust antenna settings, indicate instructions for a user via a GUI) when it cannot receive the high-quality BIS data at the lower transmission power.

**Claims**

1. An electronic device (101, 300) comprising:

   a communication circuit (190); and
   at least one processor (120) connected to the communication circuit (190),
   wherein the at least one processor (120) is configured to:

      control the communication circuit to broadcast (2210) an advertising message including information about a bitrate used to transmit broadcast isochronous stream, BIS, data,
      control the communication circuit to broadcast (2220), in a first ISO interval, one or more first BIS data of a first attribute, and
      control the communication circuit to broadcast (2230), in the first ISO interval, one or more second BIS data of a second attribute.

2. The electronic device (101, 300) of claim 1,

   wherein the first attribute includes a first bitrate to be used to broadcast the one or more first BIS data, and the second attribute includes a second bitrate to be used to broadcast the one or more second BIS data, and
   wherein the first bitrate is different from the second bitrate.

3. The electronic device (101, 300) of any one of claims 1 to 2,

   wherein the first attribute includes a first transmission power to be used to broadcast the one or more first BIS data, and the second attribute includes a second transmission power to be used to broadcast the one or more second BIS data, and
   wherein the first transmission power is different from the second transmission power.

4. The electronic device (101, 300) of claim 1, wherein the first BIS data is data related to a first BIS event corresponding to the first ISO interval, and
   wherein the second BIS data is data related to a second BIS event indicated by a pre-transmission offset, PTO, and the second BIS event is after the PTO from the first BIS event.

5. The electronic device (101, 300) of claim 4 , wherein the advertising message further includes at least one of the number of BISs, a burst number, BN, the number of subevents per BIS, the number of groups carrying data related to the first BIS event, the PTO, or a time value between adjacent broadcast isochronous group, BIG, anchor points.

6. The electronic device (101, 300) of any one of claims 1 to 5, wherein the at least one processor (120) is configured to:

   set a first group including the first BIS data to be transmitted in the first ISO interval based on the first attribute, and
   set a second group including the second BIS data to be transmitted in the first ISO interval based on the second attribute.

7. The electronic device (101, 300) of any one of claims 1 to 6, wherein the at least one processor (120) is configured to:

   determine the first attribute based on quality of the first BIS data, and
   determine the second attribute based on quality of the second BIS data.

8. The electronic device (101, 300) of of claim 2, wherein each of the first bitrate and the second bitrate is set equal to or less than a third bitrate, and
wherein the third bitrate is determined based on a time between two adjacent BIG anchor points and information about maximum size of transmittable BIS data.

9. The electronic device (101, 300) of any one of claims 1 to 8,
wherein the advertisement message is transmitted one or more times before the transmission of the first and second BIS data.

10. An electronic device (101, 310 to 360) comprising:

a communication circuit (190); and
at least one processor (120) connected to the communication circuit (190),
wherein the at least one processor (120) is configured to:

receive (2210), through the communication circuit, an advertising message including information about a bitrate used to transmit broadcast isochronous stream, BIS, data,
receive, through the communication circuit in a first ISO interval, one or more first BIS data of a first attribute, and
receive, through the communication circuit in the first ISO interval, one or more second BIS data of a second attribute.

11. The electronic device (101, 310 to 360) of claim 10,

wherein the first attribute includes a first bitrate to be used to broadcast the one or more first BIS data, and the second attribute includes a second bitrate to be used to broadcast the one or more second BIS data, and
wherein the first bitrate is different from the second bitrate.

12. The electronic device (101, 310 to 360) of any one of claims 10 to 11,

wherein the first attribute includes a first transmission power to be used to broadcast the one or more first BIS data, and the second attribute includes a second transmission power to be used to broadcast the one or more second BIS data, and
wherein the first transmission power is different from the second transmission power.

13. The electronic device (101, 310 to 360) of claim 10, wherein the first BIS data is data related to a first BIS event corresponding to the first interval, and
wherein the second BIS data is data related to a second BIS event indicated by a pre-transmission offset, PTO, and the second BIS event is after the PTO from the first BIS event.

14. A method of operating electronic device (101, 300), the method comprising:

broadcasting (2210) an advertising message including information about a bitrate used to transmit broadcast isochronous stream. BIS. data;
broadcasting (2220), in a first ISO interval, one or more first BIS data of a first attribute;
and
broadcasting (2230), in the first ISO interval, one or more second BIS data of a second attribute.

15. A method of operating an electronic device (101, 310 to 360), the method comprising:

receiving (2210) an advertising message including information about a bitrate used to transmit broadcast isochronous stream (BIS) data;
receiving (2220), in a first ISO interval, one or more first BIS data of a first attribute; and
receiving (2230), in the first ISO interval, one or more second BIS data of a second attribute.

**Patentansprüche**

1. Elektronische Vorrichtung (101, 300), umfassend:

   eine Kommunikationsschaltung (190); und
   mindestens einen Prozessor (120), der mit der Kommunikationsschaltung (190) verbunden ist,
   wobei der mindestens eine Prozessor (120) ferner konfiguriert ist zum:

   Steuern der Kommunikationsschaltung, sodass sie eine Ankündigungsnachricht per Broadcast sendet (2210), die Informationen über eine Bitrate enthält, die zum Übertragen von Daten eines isochronen Broadcast-Datenstroms, BIS, verwendet wird,
   Steuern der Kommunikationsschaltung, sodass sie in einem ersten ISO-Intervall eine oder mehrere erste BIS-Daten eines ersten Attributs per Broadcast sendet (2220), und
   Steuern der Kommunikationsschaltung, sodass sie im ersten ISO-Intervall ein oder mehrere zweite BIS-Daten eines zweiten Attributs per Broadcast sendet (2230).

2. Elektronische Vorrichtung (101, 300) nach Anspruch 1,

   wobei das erste Attribut eine erste Bitrate beinhaltet, die zum Senden per Broadcast der einen oder mehreren ersten BIS-Daten verwendet wird, und das zweite Attribut eine zweite Bitrate beinhaltet, die zum Senden per Broadcast der einen oder mehreren zweiten BIS-Daten verwendet wird, und
   wobei sich die erste Bitrate von der zweiten Bitrate unterscheidet.

3. Elektronische Vorrichtung (101, 300) nach einem der Ansprüche 1 bis 2,

   wobei das erste Attribut eine erste Übertragungsleistung beinhaltet, die zum Senden per Broadcast der einen oder mehreren ersten BIS-Daten verwendet wird, und das zweite Attribut eine zweite Übertragungsleistung beinhaltet, die zum Senden per Broadcast der einen oder mehreren zweiten BIS-Daten verwendet wird, und
   wobei sich die erste Übertragungsleistung von der zweiten Übertragungsleistung unterscheidet.

4. Elektronische Vorrichtung (101, 300) nach Anspruch 1, wobei die ersten BIS-Daten Daten sind, die sich auf ein erstes BIS-Ereignis beziehen, das dem ersten ISO-Intervall entspricht, und
   wobei die zweiten BIS-Daten Daten sind, die sich auf ein zweites BIS-Ereignis beziehen, das durch einen Vorübertragungsversatz, PTO, angegeben ist, und das zweite BIS-Ereignis nach dem PTO vom ersten BIS-Ereignis stattfindet.

5. Elektronische Vorrichtung (101, 300) nach Anspruch 4, wobei die Ankündigungsnachricht ferner mindestens eines von der BIS-Anzahl, einer Burst-Anzahl, BN, der Anzahl der Teilereignisse pro BIS, der Anzahl der Gruppen, die Daten in Bezug auf das erste BIS-Ereignis tragen, dem PTO oder einem Zeitwert zwischen benachbarten Ankerpunkten einer isochronen Broadcast-Gruppe, BIG, beinhaltet.

6. Elektronische Vorrichtung (101, 300) nach einem der Ansprüche 1 bis 5, wobei der mindestens eine Prozessor (120) konfiguriert ist zum:

   Festlegen einer ersten Gruppe, die die ersten BIS-Daten beinhaltet, die im ersten ISO-Intervall übertragen werden sollen, basierend auf dem ersten Attribut, und
   Festlegen einer zweiten Gruppe, die die zweiten BIS-Daten beinhaltet, die im ersten ISO-Intervall übertragen werden sollen, basierend auf dem zweiten Attribut.

7. Elektronische Vorrichtung (101, 300) nach einem der Ansprüche 1 bis 6, wobei der mindestens eine Prozessor (120) konfiguriert ist zum:

   Bestimmen des ersten Attributs basierend auf einer Qualität der ersten BIS-Daten, und
   Bestimmen des zweiten Attributs basierend auf einer Qualität der zweiten BIS-Daten.

8. Elektronische Vorrichtung (101, 300) nach Anspruch 2, wobei jede der ersten Bitrate als auch der zweiten Bitrate gleich oder kleiner als eine dritte Bitrate festgelegt ist, und
   wobei die dritte Bitrate basierend auf einer Zeit zwischen zwei benachbarten BIG-Ankerpunkten und Informationen über eine maximale Größe der übertragbaren BIS-Daten bestimmt wird.

9.  Elektronische Vorrichtung (101, 300) nach einem der Ansprüche 1 bis 8,
    wobei die Ankündigungsnachricht ein oder mehrere Male vor der Übertragung der ersten und zweiten BIS-Daten übertragen wird.

10. Elektronische Vorrichtung (101, 310 bis 360), umfassend:

    eine Kommunikationsschaltung (190); und
    mindestens einen Prozessor (120), der mit der Kommunikationsschaltung (190) verbunden ist,
    wobei der mindestens eine Prozessor (120) ferner konfiguriert ist zum:

    Empfangen (2210), über die Kommunikationsschaltung, einer Ankündigungsnachricht, die Informationen über eine Bitrate enthält, die zum Übertragen von Daten eines isochronen Broadcast-Datenstroms, BIS, verwendet wird,
    Empfangen, über die Kommunikationsschaltung in einem ersten ISO-Intervall, einer oder mehrerer erster BIS-Daten eines ersten Attributs, und
    Empfangen, über die Kommunikationsschaltung in dem ersten ISO-Intervall, einer oder mehrere zweiter BIS-Daten eines zweiten Attributs.

11. Elektronische Vorrichtung (101, 310 bis 360) nach Anspruch 10,

    wobei das erste Attribut eine erste Bitrate beinhaltet, die zum Senden per Broadcast der einen oder mehreren ersten BIS-Daten verwendet wird, und das zweite Attribut eine zweite Bitrate beinhaltet, die zum Senden per Broadcast der einen oder mehreren zweiten BIS-Daten verwendet wird, und
    wobei sich die erste Bitrate von der zweiten Bitrate unterscheidet.

12. Elektronische Vorrichtung (101, 310 bis 360) nach einem der Ansprüche 10 bis 11,

    wobei das erste Attribut eine erste Übertragungsleistung beinhaltet, die zum Senden per Broadcast der einen oder mehreren ersten BIS-Daten verwendet wird, und das zweite Attribut eine zweite Übertragungsleistung beinhaltet, die zum Senden per Broadcast der einen oder mehreren zweiten BIS-Daten verwendet wird, und
    wobei sich die erste Übertragungsleistung von der zweiten Übertragungsleistung unterscheidet.

13. Elektronische Vorrichtung (101, 310 bis 360) nach Anspruch 10, wobei die ersten BIS-Daten Daten sind, die sich auf ein erstes BIS-Ereignis beziehen, das dem ersten Intervall entspricht, und
    wobei die zweiten BIS-Daten Daten sind, die sich auf ein zweites BIS-Ereignis beziehen, das durch einen Vorübertragungsversatz, PTO, angegeben ist, und das zweite BIS-Ereignis nach dem PTO vom ersten BIS-Ereignis stattfindet.

14. Verfahren zum Betreiben einer elektronischen Vorrichtung (101, 300), wobei das Verfahren Folgendes umfasst:

    Senden (2210) einer Ankündigungsnachricht per Broadcast, die Informationen über eine Bitrate enthält, die zum Übertragen von Daten eines isochronen Broadcast-Datenstroms, BIS, verwendet wird;
    Senden (2220), in einem ersten ISO-Intervall, einer oder mehrerer erster BIS-Daten eines ersten Attributs per Broadcast; und
    Senden (2230), in dem ersten ISO-Intervall, einer oder mehrerer zweiter BIS-Daten eines zweiten Attributs per Broadcast.

15. Verfahren zum Betreiben einer elektronischen Vorrichtung (101, 310 bis 360), wobei das Verfahren Folgendes umfasst:

    Empfangen (2210) einer Ankündigungsnachricht, die Informationen über eine Bitrate enthält, die zum Übertragen von Daten eines isochronen Broadcast-Datenstroms (BIS) verwendet wird;
    Empfangen (2220), in einem ersten ISO-Intervall, einer oder mehrerer erster BIS-Daten eines ersten Attributs; und
    Empfangen (2230), in dem ersten ISO-Intervall, einer oder mehrerer zweiter BIS-Daten eines zweiten Attributs.

**Revendications**

1. Dispositif électronique (101, 300), comprenant :

   un circuit de communication (190) ; et
   au moins un processeur (120) connecté au circuit de communication (190),
   dans lequel l'au moins un processeur (120) est configuré pour :

   commander le circuit de communication pour diffuser (2210) un message publicitaire comprenant des informations sur un débit binaire utilisé pour transmettre des données de flux isochrone de diffusion, BIS, commander le circuit de communication pour diffuser (2220), dans un premier intervalle ISO, une ou plusieurs premières données BIS d'un premier attribut, et
   commander le circuit de communication pour diffuser (2230), dans le premier intervalle ISO, une ou plusieurs secondes données BIS d'un second attribut.

2. Dispositif électronique (101, 300) de la revendication 1,

   dans lequel le premier attribut comprend un premier débit binaire à utiliser pour diffuser l'une ou les plusieurs premières données BIS, et le second attribut comprend un second débit binaire à utiliser pour diffuser l'une ou les plusieurs secondes données BIS, et
   dans lequel le premier débit binaire est différent du second débit binaire.

3. Dispositif électronique (101, 300) de l'une quelconque des revendications 1 à 2,

   dans lequel le premier attribut comprend une première puissance de transmission à utiliser pour diffuser l'une ou les plusieurs premières données BIS, et le second attribut comprend une seconde puissance de transmission à utiliser pour diffuser l'une ou les plusieurs secondes données BIS, et
   dans lequel la première puissance de transmission est différente de la seconde puissance de transmission.

4. Dispositif électronique (101, 300) de la revendication 1, dans lequel les premières données BIS sont des données relatives à un premier événement BIS correspondant au premier intervalle ISO, et
   dans lequel les secondes données BIS sont des données relatives à un second événement BIS indiqué par un décalage de pré-transmission, PTO, et le second événement BIS est postérieur au PTO du premier événement BIS.

5. Dispositif électronique (101, 300) de la revendication 4, dans lequel le message publicitaire comprend en outre au moins l'un du nombre de BIS, d'un nombre de rafales, BN, du nombre de sous-événements par BIS, du nombre de groupes transportant des données relatives au premier événement BIS, du PTO, ou d'une valeur temporelle entre des points d'ancrage de groupes isochrones de diffusion, BIG, adjacents.

6. Dispositif électronique (101, 300) de l'une quelconque des revendications 1 à 5, dans lequel l'au moins un processeur (120) est configuré pour :

   définir un premier group comprenant les premières données BIS à transmettre dans le premier intervalle ISO en se basant sur le premier attribut, et
   définir un second groupe comprenant les secondes données BIS à transmettre dans le premier intervalle ISO en se basant sur le second attribut.

7. Dispositif électronique (101, 300) de l'une quelconque des revendications 1 à 6, dans lequel l'au moins un processeur (120) est configuré pour :

   déterminer le premier attribut en se basant sur la qualité des premières données BIS, et
   déterminer le second attribut en se basant sur la qualité des secondes données BIS.

8. Dispositif électronique (101, 300) de la revendication 2, dans lequel chacun du premier débit binaire et du second débit binaire est réglé sur une valeur égale ou inférieure à un troisième débit binaire, et
   dans lequel le troisième débit binaire est déterminé en se basant sur le temps écoulé entre deux points d'ancrage BIG adjacents et sur les informations relatives à la taille maximale des données BIS transmissibles.

**9.** Dispositif électronique (101, 300) de l'une quelconque des revendications 1 à 8,
dans lequel le message publicitaire est transmis une ou plusieurs fois avant la transmission des premières et secondes données BIS.

**10.** Dispositif électronique (101, 310 à 360), comprenant :

un circuit de communication (190) ; et
au moins un processeur (120) connecté au circuit de communication (190),
dans lequel l'au moins un processeur (120) est configuré pour :

recevoir (2210), par l'intermédiaire du circuit de communication, un message publicitaire comprenant des informations sur un débit binaire utilisé pour transmettre des données de flux isochrone de diffusion, BIS,
recevoir, par l'intermédiaire du circuit de communication, dans un premier intervalle ISO, une ou plusieurs premières données BIS d'un premier attribut, et
recevoir, par l'intermédiaire du circuit de communication, dans le premier intervalle ISO, une ou plusieurs secondes données BIS d'un second attribut.

**11.** Dispositif électronique (101, 310 à 360) de la revendication 10,

dans lequel le premier attribut comprend un premier débit binaire à utiliser pour diffuser l'une ou les plusieurs premières données BIS, et le second attribut comprend un second débit binaire à utiliser pour diffuser l'une ou les plusieurs secondes données BIS, et
dans lequel le premier débit binaire est différent du second débit binaire.

**12.** Dispositif électronique (101, 310 à 360) de l'une quelconque des revendications 10 à 11,

dans lequel le premier attribut comprend une première puissance de transmission à utiliser pour diffuser l'une ou les plusieurs premières données BIS, et le second attribut comprend une seconde puissance de transmission à utiliser pour diffuser l'une ou les plusieurs secondes données BIS, et
dans lequel la première puissance de transmission est différente de la seconde puissance de transmission.

**13.** Dispositif électronique (101, 310 à 360) de la revendication 10, dans lequel les premières données BIS sont des données relatives à un premier événement BIS correspondant au premier intervalle, et
dans lequel les secondes données BIS sont des données relatives à un second événement BIS indiqué par un décalage de pré-transmission, PTO, et le second événement BIS est postérieur au PTO du premier événement BIS.

**14.** Procédé d'opération d'un dispositif électronique (101, 300), le procédé comprenant :

diffuser (2210) un message publicitaire comprenant des informations sur un débit binaire utilisé pour transmettre des données de flux isochrone de diffusion, BIS ;
diffuser (2220), dans un premier intervalle ISO, une ou plusieurs premières données BIS d'un premier attribut ; et
diffuser (2230), dans le premier intervalle ISO, une ou plusieurs secondes données BIS d'un second attribut.

**15.** Procédé d'opération d'un dispositif électronique (101, 310 à 360), le procédé comprenant :

recevoir (2210) un message publicitaire comprenant des informations sur un débit binaire utilisé pour transmettre des données de flux isochrone de diffusion (BIS) ;
recevoir (2220), dans un premier intervalle ISO, une ou plusieurs premières données BIS d'un premier attribut ; et
recevoir (2230), dans le premier intervalle ISO, une ou plusieurs secondes données BIS d'un second attribut.

ELECTRONIC DEVICE 101

100

130 — MEMORY 132
VOLATILE MEMORY

134
NON-VOLATILE MEMORY
INTERNAL MEMORY ~136
EXTERNAL MEMORY ~138

150
INPUT MODULE

155
SOUND OUTPUT MODULE

160
DISPLAY MODULE

189
BATTERY

120
PROCESSOR
121
MAIN PROCESSOR
123
AUXILIARY PROCESSOR

188
POWER MANAGEMENT MODULE

190
COMMUNICATION MODULE
192
WIRELESS COMMUNICATION MODULE
194
WIRED COMMUNICATION MODULE

196
SUBSCRIBER IDENTIFICATION MODULE

197
ANTENNA MODULE

170
AUDIO MODULE

176
SENSOR MODULE

177
INTERFACE

178
CONNECTING TERMINAL

179
HAPTIC MODULE

180
CAMERA MODULE

140
PROGRAM
146
APPLICATION
144
MIDDLEWARE
142
OPERATING SYSTEM

199
SECOND NETWORK

198
FIRST NETWORK

104
ELECTRONIC DEVICE

102
ELECTRONIC DEVICE

108
SERVER

FIG. 1

EP 4 369 747 B1

200

170

**AUDIO MODULE**

210
AUDIO INPUT INTERFACE

270
AUDIO OUTPUT INTERFACE

220
AUDIO INPUT MIXER

260
AUDIO OUTPUT MIXER

230
ADC

250
DAC

240
AUDIO SIGNAL PROCESSOR

FIG. 2

FIG. 3

FIG. 4

FIG. 5A

Interleved

BIG event x

BIS2 event x

BIS1 event x

BIS_Spacing

Sub_Interval

| BIS1<br>Event x<br>Subevt 1 | BIS2<br>Event x<br>Subevt 1 | BIS1<br>Event x<br>Subevt 2 | BIS2<br>Event x<br>Subevt 2 |

BIG event x+1

BIS2 event x+1

BIS1 event x+1

Control
Subevent

| BIS1<br>Event x+1<br>Subevt 1 | BIS2<br>Event x+1<br>Subevt 1 | BIS1<br>Event x+1<br>Subevt 2 | BIS2<br>Event x+1<br>Subevt 2 |

BIG_Sync_Delay

BIG_Control_Offset

ISO_Interval

ISO_Interval

BIS1 Anchor Point
BIG Anchor Point

BIS2 Anchor Point

BIG
Synchronization Point

BIS1 Anchor Point

BIS2 Anchor Point

FIG. 5B

EP 4 369 747 B1

FIG. 6A

FIG. 6B

FIG. 6C

FIG. 7

LSB                                                                           MSB

| Header (16 bits) | Payload (0-251 octets) | MIC (32 bits) |

# FIG. 8A

| Header | | | | |
|---|---|---|---|---|
| LLID (2 bits) | CSSN (3 bits) | CSTF (1 bit) | RFU (2 bits) | Length (8 bits) |

# FIG. 8B

| Field Name | Description |
|---|---|
| LLID | The LLID field indicates the type of content of the payload field of the PDU. 0b00 = Unframed BIS Data PDU; end fragment of an SDU or a complete SDU. 0b01 = Unframed BIS Data PDU; start or continuation fragment of an SDU. 0b10 = Framed BIS Data PDU; one or more segments of an SDU. 0b11 = BIG Control PDU. |
| CSSN | Control Subevent Sequence Number |
| CSTF | Control Subevent Transmission Flag |
| Length | The Length field indicates the size, in octets, of the Payload and MIC, if included. |

# FIG. 8C

| Payload | |
|---|---|
| Opcode (1 octet) | CtrData (0 to 250 octets) |

# FIG. 8D

| Opcode | BIG Control PDU Nmae |
|---|---|
| 0x00 | BIG_CHANNEL_MAP_IND |
| 0x01 | BIG_TERMINATE_IND |
| All other values | Reserved for future use |

# FIG. 8E

| BIG Info | | | | |
|---|---|---|---|---|
| BIG_Offset (14 bits) | BIG_Offset_Units (1 bit) | ISO_Interval (12 bits) | Num_BIS (5 bits) | NSE (5 bits) |

| BIG Info (continued) | | | | |
|---|---|---|---|---|
| BN (3 bits) | Sub_Interval (20 bits) | PTO (4 bits) | BIS_Spacing (20 bits) | IRC (4 bits) |

| BIG Info (continued) | | | | |
|---|---|---|---|---|
| Max_PDU (8 bits) | RFU (8 bits) | Seed Access Address (32 bits) | SDU_Interval (20 bits) | Max_SDU (12 bits) |

| BIG Info (continued) | | | | |
|---|---|---|---|---|
| BaseCRCInit (16 bits) | ChM (37 bits) | PHY (3 bits) | bisPayloadCount (39 bits) | Framing (1 bit) |

| BIG Info (continued) MSB | |
|---|---|
| GIV (8 octets) | GSKD (16 octets) |

# FIG. 9

FIG. 10

START

BROADCAST ADVERTISING MESSAGE
INCLUDING TRANSMISSION
INFORMATION ABOUT BIS DATA ─ 1110

START TRANSMITTING BIS DATA
BASED ON TRANSMISSION
INFORMATION ABOUT BIS DATA ─ 1120

DIVIDE BIS DATA INTO TWO GROUPS
(OR PDU GROUPS)
BASED ON PRESET CRITERION
(E.G., AT LEAST ONE OF BIS PARAMETERS) ─ 1130

1140
BIS DATA
BELONGING TO FIRST GROUP? ── NO

YES

1150
TRANSMIT BIS DATA BY
APPLYING FIRST ATTRIBUTE

1160
TRANSMIT BIS DATA BY
APPLYING SECOND ATTRIBUTE

FIG. 11

Adv interval | Adv interval | Adv interval

FIG. 12

FIG. 13A

FIG. 13B

2 BISes, BN2, IRC2, PTO2, NSE6, 96kbps

BIS Event 1

| L0 | R0 | L1 | R1 | L0 | R0 | L1 | R1 | L4 | R4 | L5 | R5 | C T R |

BIS Spacing

Sub Interval

## FIG. 14A

BIS Event 2

| L2 | R2 | L3 | R3 | L2 | R2 | L3 | R3 | L6 | R6 | L7 | R7 |

## FIG. 14B

BIS Event 3

| L4 | R4 | L5 | R5 | L4 | R4 | L5 | R5 | L8 | R8 | L9 | R9 |

FIG. 14C

FIG. 15A

FIG. 15B

2 BISes, BN2, IRC2, PTO2, NSE6, 96kbps ↔ 80kbps

| L0 8dBm 80byte | R0 8dBm 80byte | L1 8dBm 80byte | R1 8dBm 80byte | L0 8dBm 80byte | R0 8dBm 80byte | L1 8dBm 80byte | R1 8dBm 80byte | L4 12dBm 120byte | R4 12dBm 120byte | L5 12dBm 120byte | R5 12dBm 120byte | CTR |

# FIG. 15C

2 BISes, BN2, IRC2, PTO2, NSE6, 96kbps ↔ 80kbps

| L0 12dBm 120byte | R0 12dBm 120byte | L1 12dBm 120byte | R1 12dBm 120byte | L0 12dBm 120byte | R0 12dBm 120byte | L1 12dBm 120byte | R1 12dBm 120byte | L4 8dBm 80byte | R4 8dBm 80byte | L5 8dBm 80byte | R5 8dBm 80byte | CTR |

# FIG. 15D

2 BISes, BN2, IRC2, PTO2, NSE6, 96kbps ↔ 80kbps

FIG. 16

2 BISes, BN2, IRC2, PTO2, NSE6, 96kbps ↔ 80kbps

FIG. 17

50

2 BISes, BN2, IRC2, PTO2, NSE6, 96kbps ↔ 80kbps

# FIG. 18

# FIG. 19A

| L0 80byte | L1 80byte | L2 80byte | L3 80byte | L4 120byte | L5 120byte | L6 120byte | L7 120byte | L8 120byte | L9 120byte |
|---|---|---|---|---|---|---|---|---|---|

# FIG. 19B

| L0 8dBm 80byte | L1 8dBm 80byte | | L2 8dBm 80byte | L3 8dBm 80byte | | L4 8dBm 80byte | L5 8dBm 80byte |

FIG. 20A

| L0 | L1 | L2 | L3 | L4 | L5 |
|---|---|---|---|---|---|
| 80byte | 80byte | 80byte | 80byte | 80byte | 80byte |

# FIG. 20B

FIG. 21A

| L0 | L1 | L2 | L3 | L4 | L5 | L6 | L7 | L8 | L9 |
|---|---|---|---|---|---|---|---|---|---|
| 80byte | 80byte | 80byte | 80byte | 120byte | 120byte | 120byte | 120byte | 120byte | 120byte |

# FIG. 21B

START

BROADCAST ADVERTISING MESSAGE INCLUDING INFORMATION
ABOUT FIRST BITRATE AND FIRST TRANSMISSION POWER USED TO
TRANSMIT BROADCAST ISOCHRONOUS STREAM (BIS) DATA ── 2210

TRANSMIT FIRST BIS DATA BASED ON SECOND
BITRATE AND SECOND TRANSMISSION POWER IN FIRST INTERVAL ── 2220

TRANSMIT SECOND BIS DATA BASED ON THIRD
BITRATE AND THIRD TRANSMISSION POWER IN FIRST INTERVAL ── 2230

END

FIG. 22

Power Level 1

Power Level 2

Power Level 3

| K | K | K | K+4 | K+8 | K+1 | K+1 | K+1 | K+5 | K+9 |

ISO_Interval (ex 10ms)

# FIG. 23

FIG. 24

FIG. 25

FIG. 26A

BIS Source

High Quality    Low Quality

# FIG. 26B

**EP 4 369 747 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021250879 A